# EUROPÄISCHE PATENTANMELDUNG

(11) **EP 4 850 887 A1**
(43) Veröffentlichungstag der Anmeldung: **09.12.2026**
(21) Anmeldenummer: 26165771.2
(22) Anmeldetag: 18.03.2026
(51) Int. Cl.: B29C 49/42, B08B 9/28, B29C 49/36

(54) **VERFAHREN UND VORRICHTUNG ZUM ENTSTAUBEN DES INNEREN VON KUNSTSTOFFVORFORMLINGEN IN VORBEREITUNG AUF DEREN NACHFOLGENDES UMFORMEN IN EINEN BEHÄLTER**

(30) Priorität: 06.06.2025 DE 102025122313
(71) Anmelder: KHS GmbH, 44143 Dortmund (DE)
(72) Erfinder: Klatt, Dieter, 44143 Dortmund (DE); Lewin, Frank, 44143 Dortmund (DE)
(74) Vertreter: Eisenführ Speiser

(57) **Zusammenfassung**

Die Erfindung betrifft Verfahren und Vorrichtungen zur Beseitigung von Verunreinigungen, insbesondere von Staub, aus dem Inneren von Vorformlingen (1), welche als Hohlkörper mit einem endseitig geschlossenen Boden (5) und dem Boden (5) gegenüberliegend mit einer endseitigen Mündungsöffnung (6) ausgebildet sind, wobei der Vorformling (1) eine Längsachse (X) aufweist, die vom Boden (5) bis zur Mündungsöffnung (6) verläuft und welche bevorzugt raumdeckungsgleich mit einer Drehsymmetrieachse des Vorformlings ist. Das Beseitigen von Verunreinigungen erfolgt, indem eine Spüllanze (250) durch die Mündungsöffnung (6) in das Vorformlingsinnere und in Richtung auf den Boden (5) des Vorformlings (1) hineinbewegt und nach Erreichen eines Umkehrpunktes (10) wieder aus dem Vorformling (1) herausbewegt wird, wobei wenigstens auf einer Teilstrecke dieser Bewegung aus der Spüllanze (250) Spülgas als Spülgasstrom (220) in Richtung auf den Boden (5) abgeblasen wird. Die Erfindung ist dadurch gekennzeichnet, dass der Spülgasstrom (220), der aus der Spüllanze (250) abgeblasen wird, wenigstens einmal nach dem Beginn des Abblasens intensitätsverändert wird, insbesondere abgeschwächt wird, insbesondere unterbrochen wird, und nach der Veränderung, insbesondere nach der Abschwächung, insbesondere nach der Unterbrechung, der Spülgasstrom (220) wieder zurückverändert wird, insbesondere anschwillt, insbesondere wieder neu einsetzt.

## Beschreibung

Die Erfindung betrifft ein Verfahren nach dem Oberbegriff von Anspruch 1, insbesondere betrifft die Erfindung ein Verfahren zur Beseitigung von Verunreinigungen, insbesondere von Staub, aus dem Inneren von Vorformlingen.

Die Erfindung betrifft darüber hinaus eine Vorrichtung nach dem Oberbegriff von Anspruch 7, insbesondere betrifft die Erfindung eine Vorrichtung zur Beseitigung von Verunreinigungen, insbesondere von Staub, aus dem Inneren von Vorformlingen.

Die Erfindung betrifft den technischen Bereich der Herstellung von Kunststoffbehältern aus Vorformlingen, z.B. von Vorformlingen aus PET (Polyethylenterephthalat), wobei diese Vorformlinge hierzu zunächst auf eine Temperatur aufgeheizt werden, welche das anschließende Umformen erlaubt. Üblicherweise erhält der Vorformling auch ein Temperaturprofil in seiner Längsrichtung, ggf. auch in Umfangsrichtung. Fachüblich wird dieser Vorgang des Aufheizens als Temperaturkonditionierung bezeichnet. Das Umformen selber erfolgt durch Einführen eines Umformfluides unter Druck in den Vorformling hinein, sodass sich der Vorformling gegen eine umgebende äußere Form aufweitet und sich die entstehende Behälterblase sowie der entstehende Behälter an die Innenkontur der von der äußeren Form gebildeten Kavität anlegt. Typischerweise erfolgt dieses umformende Herstellen von Behältern in sogenannten Blasmaschinen, bevorzugt unter Verwendung einer Reckstange, also bevorzugt in Streckblasmaschinen. Solche Blasmaschinen bzw. Streckblasmaschinen, beide Begriffe werden nachfolgend in synonymer Weise benutzt, sind in vielfältiger Art bekannt und bedürfen insofern keiner näheren technischen Beschreibung. Lediglich beispielhaft wird auf die EP 4 088 907 A1 und die DE 10 2010 006 898 A1 verwiesen, die Beispiele von Streckblasmaschinen zeigen.

Bekannt ist also die Herstellung von Behältern durch Blasformen aus Vorformlingen aus einem thermoplastischen Material, beispielsweise aus Vorformlingen aus PET, wobei die Vorformlinge innerhalb einer Blasmaschine unterschiedlichen Bearbeitungsstationen zugeführt werden. Typischerweise weist eine Blasmaschine eine Heizvorrichtung zum Temperieren bzw. zum thermischen Konditionieren der Vorformlinge sowie eine Umformvorrichtung mit wenigstens einer Umformungsstation auf, beispielsweise in Form einer Blasstation, in deren Bereich der jeweils zuvor temperaturkonditionierte Vorformling zu einem Behälter expandiert wird.

Die Expansion erfolgt beispielsweise mit Hilfe eines Druckgases, insbesondere Druckluft, als Druckmedium, das mit einem Formdruck in den zu expandierenden Vorformling eingeleitet wird. Bekannt ist auch, dass dies in mehreren Stufen mit unterschiedlichen Blasdrücken erfolgt. Der verfahrenstechnische Ablauf bei einer derartigen Expansion des Vorformlings wird z.B. in der DE 43 40 291 A1 erläutert. Der grundsätzliche Aufbau einer Blasstation ist z.B. in der DE 42 12 583 A1 beschrieben. Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es ist jedoch auch möglich, Behälter aus Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Die DE 10 2012 105 999 A1 zeigt ein Beispiel dazu. Für die vorliegende Erfindung ist aber nicht relevant, auf welche Weise eine Umformung erfolgt, ob also ein gasförmiges oder ein flüssiges Umformfluid oder beide kombiniert Verwendung findet.

Es ist einerseits bekannt, Vorformlinge herzustellen, in der Regel in einem Spritzgussverfahren, und sogleich in einem nachfolgenden Umformungsschritt in einen Behälter umzuformen, wobei ggf. zunächst noch eine Temperierung erfolgt, wenn die Vorformlinge nach ihrer Herstellung noch nicht die geeignete Temperatur aufweisen sollten. Bei einem solchen sogenannten Einstufenverfahren besteht mangels Zwischenlagerung nicht die Gefahr, dass nach der Herstellung in das Vorformlingsinnere Verunreinigungen und insbesondere Staub eindringt, welcher für die nachfolgende Erwärmung und das nachfolgende Umformen störend ist.

Andererseits ist bei den sogenannten Zweistufenverfahren bekannt, dass zunächst Vorformlinge hergestellt, z.B. im Spritzgussverfahren, und zwischengelagert werden. Die zwischengelagerten Vorformlinge werden später umgeformt und hierzu z.B. einem Vorrat entnommen und z.B. nach Ausrichtung und Sortierung in entsprechenden Ausricht- und Sortiereinrichtungen einer Blasmaschine zugeführt. Im Laufe der Zwischenlagerung können störende Verunreinigungen, z.B. Staub, in die Vorformlinge eindringen. Es ist daher bekannt, dass vor dem Umformvorgang die Vorformlinge bzw. das Vorformlingsinnere von den Verunreinigungen bzw. von Staub befreit werden. Dies erfolgt in aller Regel auch zeitlich bevor die Vorformlinge auf die für die Umformung erforderliche Temperatur gebracht werden, bevor also diese Vorformlinge in einer Heizvorrichtung temperaturkonditioniert werden, denn auch für die Temperaturkonditionierung sind Verunreinigungen bzw. ist Staub störend für die Ausbildung der gewünschten Temperatur und für die Ausbildung eines gewünschten Temperaturprofils z.B. in Längsrichtung der Vorformlinge, gegebenenfalls auch in Umfangsrichtung der Vorformlinge.

Insofern ist es für solche Zweistufenverfahren im Stand der Technik bekannt, dass die Vorformlinge, bevor diese umgeformt und/oder bevor diese temperaturkonditioniert werden, einer sogenannten Endstaubungsvorrichtung zuzuführen, welche das Vorformlingsinnere entstaubt bzw. Verunreinigungen beseitigt. Dazu ist z.B. bekannt, dass auf einem umlaufenden Entstaubrad mehrere Spüllanzen höhenbeweglich und umfangsbeabstandet voneinander angeordnet sind, denen jeweils ein Vorformling zugeführt wird und die während eines Umlaufs in diesen Vorformling eintauchen, dabei Spülgas abgeben und wieder aus dem Vorformling herausgeführt werden. Das Spülgas soll den Staub bzw. die Verunreinigungen aufwirbeln in Richtung Vorformlingsmündung. In aller Regel weist die Entstaubungsvorrichtung auch eine Absaugeinrichtung auf, welche aus dem Vorformling austretendes Spülgas inklusive der durch das Spülgas aufgewirbelten und mitgerissenen Stäube und Verunreinigungen absaugt.

Solche gattungsgemäßen Verfahren und Vorrichtungen sind z.B. aus der DE 101 40 906 A1 oder der EP 3 363 614 A1 bekannt. Dort ist einerseits generell gezeigt, dass durch die in Vorformlinge eintauchende Spüllanze hindurch Spülgas zugeführt wird, welche beim Austritt aus dem offenen Ende des Vorformlings zusammen mit den davon mitgeführten Verunreinigungen abgesaugt wird. Bei der DE 101 40 906 A1 wird im Wesentlichen über die gesamte Wegstrecke des Einfahrens in den Vorformling und des Herausbewegens aus dem Vorformling Spülgas aus der Spüllanze abgeblasen, während in der EP 3 363 614 A1 das Spülgas erst abgeblasen wird, wenn die Spüllanze wieder aus dem Vorformling herausbewegt wird. Während des Einfahrens wird also kein Spülgas abgeblasen. Diese beiden Dokumente zum Stand der Technik sind gattungsbildend sowohl für den Verfahrensanspruch 1 als auch für den Vorrichtungsanspruch 7.

Die mit diesem gattungsbildenden Stand der Technik erreichte Reinigungsleistung und der dafür eingesetzte Spülgasverbrauch werden noch nicht als zufriedenstellend angesehen und sind verbesserungswürdig.

Der Erfindung liegt daher die Aufgabe zugrunde, eine verbesserte Lösung bereitzustellen, welche die genannten Probleme adressiert. Es ist insbesondere die Aufgabe der vorliegenden Erfindung, ein Verfahren und eine Vorrichtung der einleitend genannten Art derart bereitzustellen, dass Vorteile bei der Reinigungsleistung erreicht werden. Weiterhin sollen Vorteile bei der einzusetzenden Spülgasmenge erreicht werden. Schließlich ist eine gemeinsame Aufgabe, das Verfahren und die Vorrichtung technisch einfach und störunanfällig auszubilden.

Gemäß einem ersten Aspekt der Erfindung wird die Aufgabe gelöst durch ein Verfahren mit den Merkmalen von Verfahrensanspruch 1. Gemäß einem weiteren Aspekt der Erfindung wird die eingangs genannte Aufgabe auch gelöst durch eine Vorrichtung mit den Merkmalen von Vorrichtungsanspruch 7.

Vorteilhafte Ausgestaltungen der Vorrichtung und des Verfahrens sind in den jeweiligen Unteransprüchen angegeben. Die nachfolgend diskutierten bevorzugten Ausführungsformen des Verfahrens finden sich spiegelbildlich auch in der Vorrichtung wieder. Umgekehrt finden sich die nachfolgend diskutierten bevorzugten Ausführungsformen der Vorrichtung spiegelbildlich auch in dem Verfahren wieder. Die jeweils angegebenen Vorteile des Verfahrens bzw. der Vorrichtung sind spiegelbildlich auch Vorteile der Vorrichtung bzw. des Verfahrens. Die diversen Ausführungsformen der Vorrichtung dienen z.B. der Ausführung der erfindungsgemäßen Verfahren und die diversen Ausführungsformen der Verfahren werden z.B. auf einer erfindungsgemäßen Vorrichtung ausgeführt.

Das Verfahren dient der Beseitigung von Verunreinigungen, insbesondere von Staub, aus dem Inneren von Vorformlingen. Diese Verunreinigungen treten typischerweise auf, wenn Vorformlinge zunächst spritzgusstechnisch hergestellt und dann zwischengelagert werden, um später temperaturkonditioniert und dann zu Behältern umgeformt zu werden. Fachüblich wird von zweistufigen Verfahren gesprochen. Teilweise werden Vorformlinge nach ihrer Herstellung über größere Strecken transportiert, z.B. wenn der Ort der Herstellung der Vorformlinge und der Ort der Herstellung von Behältern aus den Vorformlingen auseinanderfällt. Aber selbst wenn die Herstellung der Vorformlinge und die Herstellung von Behältern aus den Vorformlingen örtlich nahe beieinander erfolgt, werden die Vorformlinge bei Zweistufenverfahren in aller Regel über eine erhebliche Zeitdauer zwischengelagert. Typische Verunreinigungen können Staubablagerungen aus der Umgebung der Vorformlinge sein, aber auch kleine Kunststoffpartikel oder kleine Verpackungspartikel können in das Vorformlingsinnere gelangen.

Vorformlinge sind im Stand der Technik in den unterschiedlichsten Größen, Formen und Farben bekannt. Sie sind im Rahmen der vorliegenden Erfindung typischerweise als Hohlkörper mit einem endseitig geschlossenen Boden und dem Boden gegenüberliegend mit einer endseitigen Mündungsöffnung ausgebildet. Die Mündungsöffnung wird dabei gebildet vom endseitigen Rand des Vorformlings an dessen offenem Ende. Der Mündungsöffnung schließt sich bodenseitig davon der Mündungsbereich an, welcher in aller Regel ein Gewinde für einen Schraubverschluss und Handhabungsstrukturen aufweist, z.B. einen Handhabungsring, auch als Neckring bezeichnet. Der Vorformling weist eine Längserstreckung in Richtung seiner Längsachse auf, die vom Boden bis zur Mündungsöffnung verläuft. Typische Vorformlinge weisen zwischen ihrem Mündungsbereich und ihrem Bodenbereich einen im wesentlichen zylindrischen Grundkörper auf. In dem Fall ist die Längsachse raumdeckungsgleich mit einer Drehsymmetrieachse des Vorformlings.

Das Beseitigen von Verunreinigungen erfolgt, indem eine Spüllanze durch die Mündungsöffnung in das Vorformlingsinnere eintritt und in Richtung auf den Boden des Vorformlings hineinbewegt und nach Erreichen eines Umkehrpunktes wieder aus dem Vorformling herausbewegt wird. Die Wegstrecke der Hineinbewegung bis zum Umkehrpunkt wird im Rahmen der vorliegenden Anmeldung als Einführstrecke bezeichnet, die Wegstrecke der Herausbewegung ausgehend vom Umkehrpunkt wird im Rahmen der vorliegenden Anmeldung als Rückführstrecke bezeichnet, wobei die beiden Strecken definitionsgemäß gleich lang sind, denn die Streckenenden beider Strecken sind jeweils der Umkehrpunkt der Bewegung und das Erreichen der Höhe der Mündungsöffnung. Beide Strecken werden aber in unterschiedlicher Richtung von der Spüllanze durchlaufen und beide Strecken zusammen werden in dieser Anmeldung als Spülstrecke bezeichnet. Die Bewegungsstrecke der Spüllanze vor Eintritt und nach Austritt durch die Mündungsöffnung zählt nicht mehr zu den genannten Strecken. Diese Bewegung dient dazu, einen Abstand zwischen Vorformling und Lanze herzustellen, damit der Vorformling gehandhabt werden kann zum Zwecke seiner Übergabe oder seiner Entnahme.

Ohne Beschränkung der Allgemeinheit wird nachfolgend davon ausgegangen, dass die Lanzenbewegung in vertikaler Richtung erfolgt, dass also die Längsachse der Vorformlinge in vertikaler Richtung ausgerichtet ist. Es ist einerseits bekannt, dass die Vorformlinge mit Mündungsöffnung nach unten weisend angeordnet sein können. Es ist aber auch bekannt, dass die Vorformlinge mit Mündungsöffnung nach oben weisend angeordnet sein können. In beiden Fällen erfolgt die Bewegung der Spüllanze in vertikaler Richtung, was in dieser Allgemeinheit auch als bevorzugt angesehen wird. Bevorzugt ist für alle Ausführungsvarianten der vorliegenden Anmeldung, dass die Mündungsöffnung der Vorformlinge nach oben weist, weil sich dadurch die Notwendigkeit vermeiden lässt, Vorformlinge in Wendeeinheiten zu wenden, denn Vorformlinge werden in aller Regel mit Mündungsöffnung nach oben weisend Blasmaschinen und Heizvorrichtungen von Blasmaschinen zugeführt.

Unter einer Spüllanze wird im Rahmen der vorliegenden Anmeldung ganz allgemein ein länglicher, z.B. stangenartiger Körper verstanden, durch den hindurch wenigstens bereichsweise Spülgas führbar ist, um Spülgas von außen in einen Vorformling zu leiten, wobei das Spülgas aus der Spüllanze austritt, nämlich aus dessen dem Vorformlingsboden zugewandten Endbereich, bevorzugt in gerichteter Weise. Die Lanze kann hierzu z.B. eine endstirnseitige Austrittsöffnung aufweisen. Denkbar ist auch, dass der Gasaustritt durch mehrere Austrittsöffnungen im Endbereich der Spüllanze erfolgt. Soweit nachfolgend Abstände der Spüllanze vom Vorformlingsboden angesprochen werden, so betrifft dies den kürzesten Abstand der inneren Oberfläche des Vorformlingsbodens vom Lanzenspitzenende. Dabei darf eine solche Spüllanze nicht verwechselt werden mit einer Reckstange mit Spülfunktion, wie sie z.B. bei sogenannten Heat-Set-Verfahren bekannt sind, und bei denen durch eine hohle Reckstange hindurch kühlendes Gas in einen aus einem Vorformling hergestellten Behälter geführt wird. Teilweise ist auch bekannt, einen Teil des Umformfluides durch eine Reckstange hindurch in einen Vorformling und die daraus entstehende Behälterblase zuzuführen. Solche Reckstangen sind keine Spüllanzen, denn solche Reckstangen sind Bestandteil von Blasstationen, nicht aber Bestandteil einer Vorrichtung zur Beseitigung von Verunreinigungen oder Bestandteil eines Verfahrens zur Beseitigung von Verunreinigungen.

Für die Bewegung der Spüllanze sind unterschiedliche Antriebseinrichtungen denkbar, ohne dass aber die Erfindung auf irgendeine dieser Möglichkeiten beschränkt ist. Die Bewegung kann z.B. entlang der Drehsymmetrieachse des Vorformlings erfolgen. Bekannt ist aber auch, diese Bewegung Off-Center auszuführen, also parallelverschoben zu dieser Drehsymmetrieachse. Im letztgenannten Fall kann die Spüllanze nicht ganz so weit in Richtung auf den Vorformlingsboden vorgeschoben werden, da dieser in aller Regel nach außen konvex gekrümmt ist, also den tiefsten Bodenpunkt in seinem Zentrum aufweist. Die Off-Center-Anordnung hat den Vorteil, dass das eingeblasene Spülgas einen geringeren Okklusions- bzw. Staueffekt für herausströmendes Spülgas bewirkt. Im Rahmen der Erfindung sind beide Möglichkeiten umfasst und realisierbar. Die Bewegung entlang der Drehsymmetrieachse und ohne Off-Center-Verschiebung wird aber für alle Ausführungsformen als bevorzugte Möglichkeit angesehen.

Als Spülgas wird in der Regel Druckluft verwendet, was auch im Rahmen der vorliegenden Anmeldung und für alle Ausführungsformen bevorzugt ist. Soweit nachfolgend von Spülluft gesprochen wird, erfolgt dies ohne Beschränkung der Allgemeinheit und stellvertretend für andere mögliche Spülgase.

Ebenso ist möglich und bekannt, das Spülgas in ionisierter Form in Richtung auf den Vorformlingsboden abzublasen und eine entsprechende Ionisationselektrode, welche das Spülgas ionisiert, im Bereich der Spülgaszuführung anzuordnen, z.B. im Inneren der Spüllanze, und welche z.B. elektrisch an einen Hochspannungsgenerator angeschlossen ist. Auch diese Varianten werden jeweils im Rahmen der vorliegenden Anmeldung als bevorzugt für alle Ausführungsformen angesehen.

Erfindungsgemäß ist, dass wenigstens auf einer Teilstrecke der Spülstrecke aus der Spüllanze heraus Spülgas, z.B. Druckluft, als Spülgasstrom in Richtung auf den Boden des Vorformlings abgeblasen wird. Wie oben ausgeführt, besteht die Spülstrecke der Spülstange aus der der Einführstrecke und aus der Rückführstrecke. Wenigstens auf einer Teilstrecke davon erfolgt also das Abblasen des Spülgases. Ein Abblasen in Richtung auf den Boden liegt dann vor, wenn die Richtungskomponente in Bodenrichtung größer ist als die Richtungskomponente senkrecht dazu. Das Abblasen kann also auch leicht geneigt gegenüber der Bewegungsrichtung der Spüllanze erfolgen. Es ist auch möglich, dass zusätzlich zu einem Abblasen in Bodenrichtung auch ein seitlich gerichtetes Abblasen aus der Spüllanze heraus erfolgt.

Im Unterschied zum gattungsbildenden Stand der Technik weist das erfindungsgemäße Verfahren die Besonderheit auf, dass der Spülgasstrom, der aus der Spüllanze abgeblasen wird, wenigstens einmal nach dem Beginn des Abblasens intensitätsverändert wird und später wieder zurückgeführt wird in Richtung auf die ursprüngliche Intensität oder darüber hinaus. Dies erfasst sowohl ein Abschwächen als auch ein Anwachsen. Die impulshafte Wirkung ist allerdings größer, wenn mit Vorteil der Spülgasstrom abgeschwächt wird, insbesondere unterbrochen wird, und nach der Abschwächung, insbesondere nach der Unterbrechung, der Spülgasstrom wieder anschwillt, insbesondere wieder neu einsetzt. Die Unterbrechung wird als Extremfall der Abschwächung angesehen. Diese Besonderheit hat die Wirkung, dass dadurch impulshaft wirkende Spülgasstöße erzeugt werden. Die Impulswirkung der Spulgasstöße ist in besonderer Weise geeignet, Verunreinigungen abzulösen und aus dem Vorformling herauszuführen, insbesondere in Verbindung mit einem ionisierten Spülgas. Erreicht wird dadurch eine gesteigerte Reinigungsleistung und z.B. aufgrund der zeitweiligen Abschwächung oder Unterbrechung des Spülgasstromes auch ein reduzierter Spülgasverbrauch. Bevorzugt ist, wenn der Spülgasstrom unterbrochen wird, also so abgeschwächt wird, dass der Spülgasstrom im Wesentlichen und jedenfalls kurzzeitig zum Erliegen kommt, weil dadurch die Impulswirkung besonders ausgeprägt ist.

In aller Regel ist ein Verfahren und eine Vorrichtung der hier beschriebenen Art vorgesehen bzw. angeordnet im Bereich der Zuführung von Vorformlingen zu einer Vorrichtung zum Herstellen von Behältern aus Vorformlingen. Besonders hohe Durchsatzleistungen erreichen solche Herstellvorrichtungen, wenn diese in rotierender Bauweise ausgeführt sind, also z.B. ein umlaufendes Umformrad, z.B. ein Blasrad, mit mehreren umfangsverteilt darauf angeordneten Umformstationen aufweisen, wie sie grundsätzlich im Stand der Technik hinlänglich in Form von Blasmaschinen oder Streckblasmaschinen bekannt sind. Bevorzugt ist daher, dass das Beseitigen von Verunreinigungen erfolgt, während die Vorformlinge auf einem drehenden Transportrad geführt sind, welches in Förderrichtung der Vorformlinge vor einer Umformungseinrichtung angeordnet ist, in der die Vorformlinge zu Behältern umgeformt werden. Eine solche besagte Umformungseinrichtung kann z.B. das Blasrad einer Blasmaschine bzw. einer Streckblasmaschine sein. Bevorzugt ist dieses drehende Transportrad in Förderrichtung der Vorformling auch vor einer Heizvorrichtung für die Temperaturkonditionierung der Vorformlinge angeordnet. Weiter ist üblich, dass Vorformlinge einer Blasmaschine bzw. einer Streckblasmaschine rotierender Bauart in einer kontinuierlichen und möglichst lückenlosen Abfolge zugeführt werden und im Eingangsbereich der Maschine vereinzelt werden. Insofern ist bevorzugt, dass das Beseitigen von Verunreinigungen erfolgt, nachdem diese besagte Vereinzelung erfolgt ist. Eine solche Vereinzelung erfolgt häufig auf einem ersten eingangsseitigen Vereinzelungsrad der Maschine und insofern ist bevorzugt das Entstaubungsrad in Transportrichtung der Vorformlinge hinter einem solchen Vereinzelungsrad angeordnet, z.B. unmittelbar danach. In diesem Zusammenhang ist zu beachten, dass der Begriff der Blasmaschine bzw. der Streckblasmaschine eine Maschine meint, die sowohl eine Umformeinrichtung umfasst, als auch eine Heizvorrichtung für die Temperaturkonditionierung der Vorformlinge.

Mit Vorteil lässt sich dieser drehende Transport während des Beseitigens von Verunreinigungen ausnutzen, indem die Bewegung der Spüllanze kurvengesteuert ausgeführt wird. Die Spüllanzenbewegung wird also in definierter Weise vorgegeben durch das Zusammenspiel einer Steuerkurve und eines daran entlanglaufenden Abnehmers. Ohne Beschränkung der Allgemeinheit ist bevorzugt, dass die Steuerkurve ortsfest angeordnet ist und der an der Steuerkurve entlanggeführte Abnehmer mechanisch mit der Spüllanze verbunden ist. Alternativ zu einer kurvengesteuert geführten Lanzenbewegung wäre es auch möglich, dass die Spülstangenbewegung durch Aktoren angetrieben wird, z.B. durch pneumatisch, hydraulisch oder elektrisch arbeitende Aktoren, z.B. könnten die Spülstangen von zugeordneten Linearmotoren, Servomotoren oder Schrittmotoren angetrieben werden.

Eine bevorzugte Verfahrensvariante sieht vor, dass das Intensitätsverändern des Spülgasstromes, insbesondere das Abschwächen des Spülgasstroms, insbesondere das Unterbrechen des Spülgasstromes, wenigstens einmal in Bodennähe erfolgt. Von bodennah bzw. von Bodennähe ist zu sprechen, wenn die Spüllanze mehr als 70 % der Einführstrecke zurückgelegt hat oder weniger als 30 % der Rückführstrecke zurückgelegt hat. Die sich aus dem Intensitätsverändern bzw. aus dem Abschwächen bzw. aus dem Unterbrechen ergebende impulshafte Wirkung auf den Vorformlingsboden ist besonders ausgeprägt, wenn bevorzugt die Intensitätsveränderung bzw. Abschwächung bzw. Unterbrechung im Bereich der letzten 20 %, bevorzugt der letzten 10 % der Einführstrecke der Spüllanze und/oder im Bereich der ersten 20 %., bevorzugt der ersten 10% der Rückführstrecke der Spüllanze erfolgt. Besonders bevorzugt erfolgt die Intensitätsveränderung bzw. Abschwächung bzw. Unterbrechung bei Erreichen des Umkehrpunktes der Spüllanzenbewegung. Bei allen diesen bevorzugten Bereichen ist die Bodennähe und damit auch die vorteilhafte Impulswirkung besonders ausgeprägt.

Die vorteilhafte Wirkung eines Spülgasstoßes bzw. eines damit verbundenen Spülgasimpulses lässt sich auch mehrfach ausnutzen und insofern wird mit Vorteil vorgeschlagen, dass der Spülluftstrom während der Lanzenbewegung entlang der Spülstrecke mehrfach intensitätsverändert wird, insbesondere mehrfach abgeschwächt wird, insbesondere mehrfach unterbrochen wird. Mit Vorteil könnte z.B. eine erste Unterbrechung während der Bewegung der Lanze entlang der Einführstrecke erfolgen, z.B. wie im vorstehenden Absatz als bevorzugt beschrieben, und eine zweite Unterbrechung entlang der Bewegung der Lanze entlang der Rückführstrecke, ebenfalls wie im vorstehenden Absatz als bevorzugt beschrieben. Zusätzlich zu einer der beiden Unterbrechungen oder zusätzlich zu beiden Unterbrechungen könnte auch im Umkehrpunkt eine Unterbrechung erfolgen. Für eine Intensitätsveränderung bzw. für eine Abschwächung gilt das Gesagte analog. Der Begriff der Bewegung meint generell das Zurücklegen der Spülstrecke. Der Begriff erfordert nicht, dass die Bewegung kontinuierlich und unterbrechungsfrei erfolgen muss. Der Begriff der Bewegung umfasst auch, dass die Spüllanze auf ihrem Weg entlang der Spülstrecke zwischenzeitlich verharrt. Insbesondere gilt dies für den Umkehrpunkt. Ein mindestens kurzzeitiges Verharren der Spüllanze im Umkehrpunkt wird sogar für alle Ausführungsvarianten als vorteilhaft angesehen.

Gerade im Hinblick auf eine Verringerung des Spülgasverbrauches wird mit Vorteil vorgeschlagen, dass der Spülluftstrom, der aus der Spüllanze austritt, erst einsetzt, nachdem die Spüllanze durch die Mündungsöffnung in das Vorformlingsinnere eingedrungen ist und mehr als 50% des Weges zum Boden hin zurückgelegt sind, also 50 % der Einführstrecke, insbesondere mehr als 75%, und der Spülluftstrom bereits einsetzt, bevor die Spüllanze ihren Umkehrpunkt erreicht hat, insbesondere bereits einsetzt, wenn der Lanzenspitzenabstand zum Boden weniger als der achtfache Innendurchmesser des Vorformlings, bevorzugt weniger als der vierfache Innendurchmesser des Vorformlings beträgt. Erreicht wird dies z.B. dadurch, dass die Spülgaszuführung von einer Verschlusseinrichtung beherrscht erfolgt und z.B. die Verschlusseinrichtung zu Zeitpunkten öffnet bzw. schließt, die dem Erreichen der obigen Streckenpositionen entspricht. Eine solche Verschlusseinrichtung kann z.B. ein Ventil sein, welche eine Spülgasleitung beherrscht, z.B. ein Magnetventil oder ein Pneumatikventil mit einem Magnetventil als Pilotventil. Eine andere Ausführungsform einer Verschlusseinrichtung wird später noch beschrieben werden.

Für alle Ausführungsvarianten wird mit Vorteil vorgeschlagen, dass der Umkehrpunkt der Spülstangenbewegung so gewählt wird, dass der Abstand der Spüllanzenspitze vom Boden des Vorformlings im Umkehrpunkt kleiner als der dreifache Innendurchmesser des Vorformlings ist, weiter bevorzugt ist der Abstand größer als der einfache Innendurchmesser des Vorformlings und schließlich beträgt der Abstand bevorzugt zwischen dem 1,5 - 2,5-fachen des Innendurchmessers, insbesondere etwa dem 2-fachen Innendurchmesser des Vorformlings.

Ebenfalls ist für alle vorgenannten Ausführungsvarianten von Vorteil, wenn das den Vorformling verlassende Spülgas von einer Absaugeinrichtung abgesaugt wird und damit auch der mit dem Spülgas mitgerissene Staub bzw. mitgerissene Verunreinigungen abgesaugt werden. In diesem Zusammenhang und für ein Beseitigen von Verunreinigungen während des Umlaufs auf einem drehenden Transportrad wird mit Vorteil vorgeschlagen, dass ein solches Absaugen des den Vorformling verlassenden Spülgases über eine radial außen von der Vorformlingsmündung angeordnete Ansaugöffnung einer Absaugeinrichtung erfolgt, wobei das Absaugen bevorzugt gleichzeitig mit dem Abblasen oder zeitlich früher als das Abblasen des Spülgases aus der Spüllanze einsetzt. Das Abblasen erfolgt nur auf einem Teilumlaufbereich des drehenden Transportrades und die Ansaugöffnung der Absaugeinrichtung könnte z.B. als entlang dieses Teilumlaufbereiches und insbesondere der Bewegungstrajektorie der Vorformlingsmündung folgend geformter Ansaugschlitz ausgeführt sein. Denkbar wäre auch, dass die Ansaugöffnung realisiert ist durch eine mit einer Vielzahl von Ansauglöchern versehene Absaugleiste, welche z.B. ebenfalls in bevorzugter Weise der Bewegungstrajektorie der Vorformlingsmündung folgend geformt ist. Das Absaugen soll nur für einen Teilumlaufbereich stattfinden und endet bevorzugt gleichzeitig mit oder kurz nach dem Beenden des Einblasens. Umsetzbar ist dies z.B. dadurch, dass der Ansaugschlitz bzw. die Absaugleiste eine entsprechende Umfangserstreckung entlang des drehenden Transportrades aufweist. Insbesondere sind die Umfangsbereiche des Transportrades frei von einem Ansaugschlitz bzw. von einer Absaugleiste, in denen Übergabe- und Entnahmevorgänge stattfinden und die Spülgaslanze noch nicht ihre Ausgangsposition verlassen hat bzw. diese Ausgangspositionen wieder erreicht hat.

Mit Vorteil und für alle vorstehenden und nachfolgenden Ausführungsvarianten ist die Bewegungsstrecke der Spülstange veränderlich in dem Sinne, dass der Umkehrpunkt einstellbar veränderlich ist. Bevorzugt ist eine stufenlose Einstellbarkeit, möglich ist aber auch eine Einstellbarkeit in Stufen. Auf diese Weisen kann eine Anpassung an veränderte Vorformlingsabmessungen erreicht werden, z.B. eine Umstellung von Vorformlingen mit kurzer Längserstreckung auf Vorformlinge mit längerer Längserstreckung.

Gemäß dem weiteren Aspekt der Erfindung wird die eingangs genannte Aufgabe gelöst durch eine Vorrichtung mit den Merkmalen von Vorrichtungsanspruch 7.

Die Vorrichtung dient der Beseitigung von Verunreinigungen, insbesondere von Staub, aus dem Inneren von Vorformlingen und weist eine beweglich angeordnete Spüllanze auf. Zu möglichen Antrieben für die Spüllanzenbewegung wurden weiter oben bereits Ausführungen gemacht, die auch hier gelten. Die Spüllanze ist für das gesteuerte Abblasen eines Spülgasstromes fluidverbunden mit einer Spülgasquelle. Diese Spülgasquelle kann z.B. eine Druckluftquelle sein. Da die Vorrichtung bevorzugt in räumlicher Nähe zu einer Blasmaschine bzw. Streckblasmaschine angeordnet und dieser z.B. vorgeschaltet ist oder in dieser integriert ist, z.B. einem Vereinzelungsrad nachfolgend, und da Blasmaschinen ohnehin druckluftversorgt sind, könnte diese Druckluftversorgung auch als Druckluftquelle genutzt werden. In Frage kommt z.B. die Verwendung von Steuerdruckluft, aber auch die Verwendung von Blasdruckluft der unterschiedlichen Blasdruckstufen. Denkbar ist auch, dass aus den fertigen Behältern abgelassene Blasluft für das Abblasen aus den Spüllanzen verwendet und den Spüllanzen zugeführt und insofern recycelt wird. Denkbar ist natürlich auch, dass als Druckluftquelle ein eigenständiger Druckluftkompressor dient oder eine andere Druckluftversorgung am Aufstellungsort der Blas- bzw. Streckblasmaschine.

Die Vorrichtung soll eine die Fluidverbindung mit der Spülgasquelle beherrschende Verschlusseinrichtung aufweisen, welche mindestens zwei den Querschnitt der Verbindung unterschiedlich verändernde Stellungen einnehmen kann, wodurch die Intensität des Spülgasstromes veränderbar ist, wobei die Verschlusseinrichtung insbesondere eine die Verbindung öffnende und eine die Verbindung sperrende Stellung einnehmen kann. Das Versperren kann dabei vollständig oder teilweise erfolgen, im letztgenannten Fall wird im Rahmen der Anmeldung von einer Abschwächung gesprochen, im erstgenannten Fall von einer Unterbrechung. Die beiden genannten Stellungen schließen nicht aus, dass weitere Stellungen eingenommen werden können, z.B. eine weitere, die Verbindung teilweise sperrende Stellung. Auch zu der Verschlusseinrichtung wurden weiter oben Erläuterungen gegeben, die auch an dieser Stelle weiterhin gelten. Möglich ist auch, dass statt einer Abschwächung eine Erhöhung des Spülgasstroms erfolgt, was ebenfalls impulshaft wirkt. Bevorzugt ist allerdings ein Abschwächen bzw. ein vollständiges Unterbrechen.

Die Spüllanze ist angeordnet und angetrieben zu einer Bewegung durch die Mündungsöffnung in das Vorformlingsinnere hinein in Richtung auf den Boden des Vorformlings, also entlang der oben definierten Einführstrecke, und nach Erreichen eines Umkehrpunktes wieder aus dem Vorformling heraus, also entlang der oben definierten Rückführstrecke, zusammen als Spülstrecke bezeichnet. Die Verschlusseinrichtung ist so ausgeführt, wenigstens auf einer Teilstrecke dieser Spülstrecke die Fluidverbindung zu öffnen und geöffnet zu halten, um Spülgas als Spülgasstrom aus der Spüllanze heraus in Richtung auf den Boden abzublasen. Soweit die Verschlusseinrichtung z.B. als schaltbares Ventil ausgebildet ist, z.B. als Magnetventil, lässt sich dies z.B. durch Umschalten des Ventiles aus einer verschlossenen in eine geöffnete Stellung und umgekehrt erreichen. Dies erfolgt zu gewünschten Zeiten und für gewünschte Zeitdauern und kann z.B. von einer Steuereinrichtung der Verschlusseinrichtung in zeitlicher koordinierter Weise durch Absetzen entsprechende Steuerbefehle ausgelöst werden.

Im Unterschied zum gattungsbildenden Stand der Technik ist die erfindungsgemäße Verschlusseinrichtung weiter ausgeführt, wenigstens einmal nach dem Beginn des Abblasens den Spülgasstrom intensitätsverändert abzugeben, insbesondere abgeschwächt abzugeben, insbesondere den Spülgasstrom zu unterbrechen, und nach der Intensitätsveränderung, insbesondere nach der Abschwächung, insbesondere nach der Unterbrechung, den Spülgasstrom wieder zurückzusetzt, insbesondere wieder anschwellen lässt, insbesondere wieder neu einsetzen lässt. Insbesondere ist die Vorrichtung ausgebildet, eines der oben erläuterten bevorzugten Verfahren auszuführen. Wie auch schon zum Verfahren erläutert, lassen sich insbesondere durch das Abschwächen und erneute Anschwellen, insbesondere durch das Unterbrechen und Neueinsetzen des Spülgasstromes, impulshafte Spülgasstöße erzeugen mit den erklärten Vorteilen.

Auch zu der Vorrichtung ist mit Vorteil vorgesehen, dass sie ein drehbar gelagertes und drehangetrieben ausgeführtes Transportrad aufweist, auch als Entstaubungsrad bezeichnet, wobei die Vorformlinge während des Beseitigens von Verunreinigungen auf dem drehenden Transportrad geführt sind, welches in Förderrichtung der Vorformlinge vor einer Umformungseinrichtung, bevorzugt auch vor einer Heizvorrichtung, weiter bevorzugt nach einem Vereinzelungsrad, angeordnet ist, in der die Vorformlinge zu Behältern umgeformt bzw. temperaturkonditioniert bzw. vereinzelt werden, wobei die Vorrichtung bevorzugt eine Absaugeinrichtung mit einer Ansaugöffnung aufweist, wobei die Ansaugöffnung angeordnet und ausgebildet ist, den Vorformling mündungsseitig verlassendes Spülgas quer zur Längsachse des Vorformlings abzusaugen, wobei die Absaugeinrichtung bevorzugt so angeordnet, ausgebildet und angesteuert ist, das Absaugen gleichzeitig mit dem Abblasen des Spülgases oder zeitlich früher als das Abblasen des Spülgases einsetzen zu lassen. Auch hierzu gelten die Erläuterungen weiter oben zu bevorzugten Ausführungsformen der Verfahren.

Eine erfindungsgemäß bevorzugte Ausführungsform einer Verschlusseinrichtung weist mit Vorteil wenigstens zwei Steuerscheiben auf, von denen wenigsten zwei relativ zueinander um eine gemeinsame Drehachse drehend ausgeführt sind, die in Dickenrichtung der Scheiben steht. Die Dickenrichtungen der beiden Scheiben stehen dabei ebenfalls parallel. Unter einer Scheibe wird dabei ein geometrischer Körper verstanden, bevorzugt im Wesentlichen in Form eines Zylinders, dessen Radius um ein Vielfaches größer ist als seine Dicke. Von einer zylindrischen Form kann abgewichen sein. Eine der Steuerscheiben ist über eine Fluidleitung mit der Spüllanze verbunden bzw. verbindbar. Die andere Steuerscheibe ist fluidverbunden oder fluidverbindbar mit der Spülgasquelle. Die Steuerscheiben weisen jeweils Durchgangsöffnungen auf, die jeweils mit der Spülgasquelle bzw. mit der Fluidleitung fluidverbunden/fluidverbindbar sind und einen Durchgang von der Scheibenunter- bis zur Scheibenoberseite freigeben. Der Durchgang erstreckt sich also über die Scheibendicke. Die Steuerscheiben sind so angeordnet und ausgebildet und so drehend ausgeführt, dass bei bestimmten Relativdrehstellungen der Steuerscheiben zueinander durch Überlappen der Durchgangsöffnungen durch die Steuerscheiben hindurch eine Fluidverbindung zwischen der Spülgasquelle und der Fluidleitung hergestellt ist, während bei anderen Relativdrehstellungen die Fluidverbindung mangels Überlappung der Durchgangsöffnungen unterbrochen ist. Auf diese Weise ist es möglich, z.B. durch kontinuierliches Drehen einer der beiden Steuerscheiben, während die andere Steuerscheibe z.B. ortsfest angeordnet ist, in durch die kontinuierliche Drehbewegung zeitlich koordinierter Weise die Fluidverbindung herzustellen und zu unterbrechen. Durch die Anordnung und Ausbildung der Durchgangsöffnungen in den beteiligten Steuerscheiben lassen sich zusammen mit der Drehbewegung einer der Scheiben also sowohl der Zeitpunkt des Einsetzens des Abblasens als auch der Zeitpunkt des Beendens des Abblasens einstellen. Ein zwischenzeitliches vollständiges oder teilweises Beenden des Überlappens der Durchgangsöffnungen in den beiden Steuerscheiben führt zu dem erfindungsgemäß gewünschten Unterbrechen oder Abschwächen des Spülgasstromes. Diese vorgeschlagene Lösung für eine Verschlusseinrichtung erweist sich als technisch einfach und störunanfällig, da keine Steuerbefehle abzusetzen sind und keine z.B. staubempfindlichen Ventile eingesetzt werden müssen. Die vorgestellte, rein mechanische Realisierung einer Verschlusseinrichtung wird insofern als bevorzugte Ausführungsform angesehen.

In einer vorteilhaften Konkretisierung dieser mechanischen Realisierung einer Verschlusseinrichtung weist wenigstens eine der relativ zueinander drehenden Steuerscheiben in Umfangsrichtung der Scheibe ein nierenförmiges Langloch als Durchgangsöffnung auf, welches durch Stegbereiche in Teillanglöcher unterteilt ist, wobei diese Stegbereiche eine Breite aufweisen, um die Durchgangsöffnungen der anderen Steuerscheibe mindestens teilweise, bevorzugt vollständig abzudecken, um dadurch die Fluidverbindung mindestens teilweise, bevorzugt vollständig zu unterbrechen. Eine Ausführungsform mit mehreren hintereinander angeordneten Langlöchern als Durchgangsöffnungen mit dazwischenliegenden Stegen wird als der vorstehenden Beschreibung unterfallend angesehen und führt zu dem gleichen Ergebnis.

Bei dieser mechanischen Realisierung einer Verschlusseinrichtung erfolgt die Zuführung der Spülluft von der Spülgasquelle zu einer ersten Steuerscheibe, welche z.B. und mit Vorteil feststehend angeordnet ist. In dieser Steuerscheibe ist eine Durchgangsöffnung ausgebildet, die die von der Spülgasquelle kommende Spülluft vom Eingang der Durchgangsöffnung zum Ausgang der Durchgangsöffnung führt. Eine Gegenscheibe mit mehreren Verbindungsbohrungen, nämlich jeweils zu einer der mehreren Spüllanzen, dreht auf der Steuerscheibe, wobei dazwischen eine Dichtscheibe angeordnet sein kann, die an der Steuerscheibe befestigt ist, aber ausgetauscht werden kann. Vorteil einer solchen Dichtscheibe ist, dass z.B. durch Austausch der Dichtscheibe Konfigurationsänderungen vorgenommen werden können, dass also z.B. die Dichtscheibe Lage und Form der Durchgangsöffnung bestimmt, aber unterschiedliche Dichtscheiben unterschiedliche Lagen und Formen der Durchgangsöffnungen vorgeben. Bei Überlappung einer Verbindungsbohrung mit dem Ausgang der Durchgangsöffnung kann Spülluft zur Spüllanze gelangen und tritt dort z.B. spitzenseitig aus. Eine Überlappung der beschriebenen Art findet nur bei Erreichen bestimmter Winkelstellungen statt und also wird nur bei Erreichen bestimmter Winkelstellungen Spülgas aus der Spüllanze heraus abgeblasen. Durch die Anordnung der Durchgangsöffnung und der Verbindungsbohrungen und durch die geometrische Gestaltung z.B. des Ausgangs der Durchgangsöffnung lassen sich drehwinkelabhängig Start- und Endzeitpunkte des Abblasens vorgeben und auch Unterbrechungen bzw. Abschwächungen des Abblasens von Spülgas realisieren.

Ein Kippmoment der besagten Scheiben lässt sich dadurch reduzieren, indem auf der diametral den besagten Durchgangsöffnungen in der Steuerscheibe gegenüberliegenden Seite ebenfalls mit der Spülgasquelle fluidverbundene Öffnungen vorgesehen sind, denen allerdings in der Gegenscheibe keine Durchgangsöffnungen gegenüberstehen. Dies lässt sich z.B. erreichen, indem die letztgenannten Öffnungen auf einem anderen Radius liegen, insbesondere auf einem kleineren Radius, als die Durchgangsöffnungen. Damit die beschriebenen Scheiben übereinander ausreichend dichtend zur Anlage kommen, können zudem Drainagebohrungen und Entlastungskanäle vorgesehen sein, die der Ausbildung eines dauerhaften Luftpolsters zwischen den Scheiben entgegenwirken.

Andere als die beschriebenen nierenförmigen Langlöcher als Durchgangsöffnung sind denkbar, z.B. tortenstückartige Durchgangsöffnungen. Die beschriebenen nierenförmigen Langlöcher werden aber als bevorzugt angesehen.

Als technisch einfache und störunanfällige Ausführungsform der Realisierung der für die Spüllanze vorgesehenen Bewegung erweist sich eine Kurvensteuerung, insbesondere, wenn die Spüllanzen zu mehreren umfangsbeabstandet auf einem drehenden Transportrad angeordnet sind und das Beseitigen von Verunreinigungen erfolgt, während Vorformlinge umlaufend auf dem Transportrad gefördert werden. Insofern wird mit Vorteil vorgeschlagen, dass die Bewegung der Spüllanze kurvengesteuert ausgeführt ist, wobei bevorzugt und nach den vorstehend beschriebenen mechanischen Verschlusseinrichtungen die Durchgangsöffnungen in den Steuerscheiben und die Führungskurve so zueinander ausgerichtet sind, dass zeitlich koordiniert ein Spülgasstrom aus der Spüllanze austritt, wenn eine gewünschte Spüllanzenposition erreicht wird, wobei die Spüllanze hierzu bevorzugt mechanisch mit einer Führungsrolle verbunden ist, welche an einer stationär angeordneten Hubeinheit mit Führungskurve entlanglaufend ausgeführt und angeordnet ist. Im Ergebnis bewegt sich die Spüllanze drehwinkelabhängig und das Verfahren läuft drehwinkelabhängig ab.

Um die Ausführungsform zu mechanisch ausgebildeten Verschlusseinrichtungen mit Steuerscheiben an unterschiedliche Vorformlinge oder an sonstige unterschiedliche Bedürfnisse und Anforderungen anpassen zu können, wird mit Vorteil vorgeschlagen, dass die Durchgangsbohrungen einer der Steuerscheiben, insbesondere die der mit der Spülgasquelle fluidverbundene Steuerscheibe, durch Abdeckmittel teilweise verschließbar bzw. abdeckbar ausgebildet sind bzw. in Umfangsrichtung mehrere Durchgangsöffnungen aufweist, von denen bedarfsweise einige Durchgangslöcher durch Abdeckmittel verschlossen bzw. abgedeckt werden können. Auf diese Weise lassen sich z.B. Start- und/oder Endzeiten des Abblasens von Spülgas einstellen, gegebenenfalls auch Zeitpunkte des Abschwächens bzw. Unterbrechens des Abblasens und/oder auch die Zeitdauer, innerhalb der ein Abblasen von Spülgas erfolgt.

Mit Vorteil weist die Steuerscheibe, welche das nierenförmige Langloch aufweist, auf der diametral gegenüberliegenden Scheibenseite ein oder mehrere auf einem anderen Radius angeordnete Kompensationslöcher auf welche ebenfalls mit der Spülgasquelle fluidverbunden sind, wobei die andere Steuerscheibe keine Durchgangslöcher aufweist, die mit diesen Kompensationslöchern in irgendeiner Relativdrehstellung überlappen können, wobei die Kompensationslöcher ein Kippmoment auf die Steuerscheibe ausüben zur Kompensation des Kippmomentes, das das nierenförmige Langloch in seinem verschlossenen oder teilverschlossenen Zustand ausübt.

Weiterhin mit Vorteil und für alle vorstehenden Ausführungsbeispiele ist die Lage des Umkehrpunktes durch Verschieben der Spüllanze an einer Spüllanzenhalterung einstellbar.

Schließlich und mit Vorteil für alle vorstehenden Ausführungsbeispiele weist die Spüllanze eine Elektrode auf, die an einen Hochspannungsgenerator anschließbar ist zur Erzeugung ionisierten Spülgases.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

### FIGURENBESCHREIBUNG

Nachfolgend wird die Erfindung anhand von bevorzugten Ausführungsbeispielen und anhand der beiliegenden Figuren näher erläutert. Die Zeichnungen sind prinzipienhafte Darstellungen und nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1: eine Skizze zur Veranschaulichung eines grundsätzlichen Aufbaus einer Vorrichtung zur umformenden Herstellung von Behältern am Beispiel einer Streckblasmaschine,
- Fig. 2: eine perspektivische Ansicht auf eine Entstaubungsvorrichtung mit einem drehenden Transportrad sowie mit einer Absaugeinrichtung,
- Fig. 3: Detailansichten zu einem Träger einer Spüllanze, zu einer Hubeinheit mit Führungskurve und eine schematische Darstellung einer in einen Vorformling eingefahrenen Spüllanze zur Erläuterung des Funktionsprinzips der Vorrichtung in Fig. 2,
- Fig. 4: eine Schnittansicht durch ein Ausführungsbeispiel einer Verschlusseinrichtung bestehend aus mehreren Scheiben;
- Fig. 5: eine Schnittansicht durch ein Entstaubungsrad mit einer Verschlusseinrichtung bestehend aus mehreren Schreiben und mit einer Absaugeinrichtung,
- Fig. 6: Ansichten auf Schreiben einer Verschlusseinrichtung bestehend aus diesen Scheiben, und
- Fig. 7: eine Prinzipdarstellung zu Abläufen während eines Entstaubungsbetriebes eines Entstaubungsrades.

Nachfolgend wird zunächst der grundsätzliche Aufbau einer Maschine zur Umformung von Vorformlingen (1) in Behälter erläutert, z.B. in Flaschen, wobei dies am Beispiel einer Streckblasmaschine (B) erfolgt. Es wird dabei davon ausgegangen, dass Druckluft als Blasgas verwendet wird. Der grundsätzliche Aufbau bliebe aber unverändert, wenn die Umformung der Vorformlinge (1) in Behälter nicht durch Blasluft bzw. Druckluft erfolgte, sondern ein anderes Blasgas oder ein flüssiges Blasfluid verwendet werden würde. Insbesondere die Heizvorrichtung (H) mit der Umlaufstrecke (20) bedürfte hierfür keiner Änderungen, denn unabhängig vom verwendeten Blasfluid ist der Vorformling (1) auf die erforderliche Umformtemperatur zu erwärmen, also einer Temperaturkonditionierung zu unterwerfen, und ist dem Vorformling (1) ggf. ein geeignetes Temperaturprofil aufzuprägen. Unabhängig davon ist auch die später angesprochene Entstaubungsvorrichtung (200) oder das Entstaubungsverfahren.

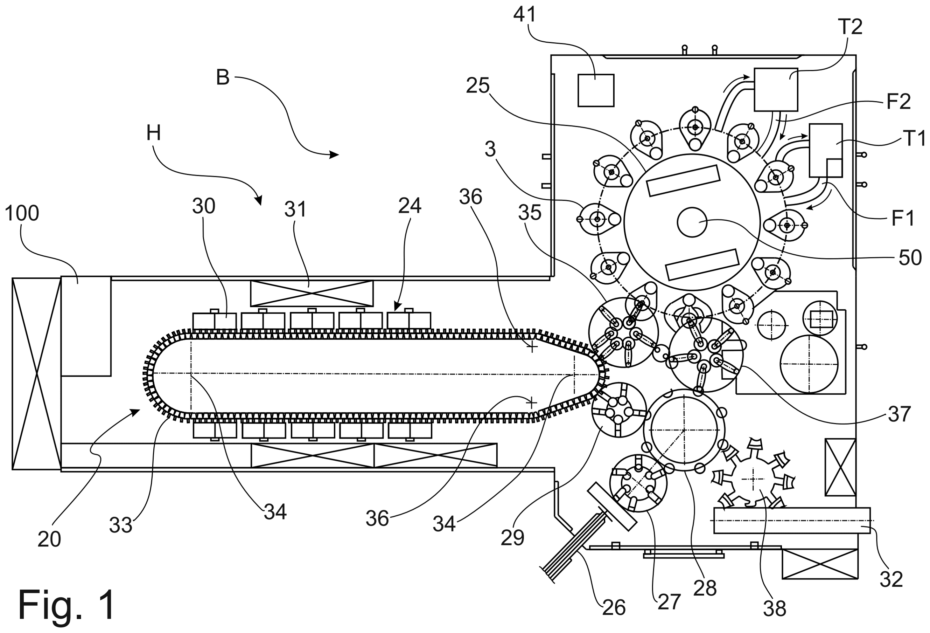

Fig. 1 zeigt zum allgemeinen Verständnis des technischen Umfeldes der Erfindung den grundsätzlichen Aufbau einer Blasmaschine (B), die mit einer Heizvorrichtung (H) mit einer Umlaufstrecke (20) sowie mit einem rotierenden Blasrad (25) versehen ist. Ausgehend von einer Vorformlingseingabe (26) werden die Vorformlinge (1) im Eingangsbereich der Maschine (B) von Übergaberädern (27, 28, 29) in die Heizvorrichtung (H) und in den Bereich der Umlaufstrecke (20) transportiert. In nicht dargestellter Weise könnte eines dieser Übergaberäder (27, 28, 29) als Entstaubungsrad ausgeführt werden oder zu den dargestellten Übergaberädern könnte ein Entstaubungsrad hinzutreten. Bevorzugt ist dieses Entstaubungsrad in Transportrichtung der Vorformlinge vor der Heizvorrichtung (H) angeordnet und hinter dem ersten Übergaberad (27), welches in der Regel ein Vereinzelungsrad (27) ist. Denkbar wäre auch, dass das Vereinzeln und Endstauben auf dem gleichen Rad erfolgt. Ein Ausführungsbeispiel für ein Entstaubungsrad wird später noch dargestellt. Denkbar ist aber auch, dass das Endstauben der Vorformlinge im Bereich der Vorformlingseingabe (26) erfolgt. Diese könnte z.B. als Einlaufschiene oder Luftförderer ausgebildet sein.

In einem Übergabebereich erfolgt eine Übergabe der Vorformlinge (1) von einem Übergaberad (29) auf eine Transporteinrichtung (33). Entlang der Umlaufstrecke (20) sind Heizeinrichtungen (30) sowie Gebläse (31) angeordnet, um die Vorformlinge (1) zu temperieren. Der Teil der Umlaufstrecke (20), der entlang der Heizeinrichtungen (30) führt, wird in der vorliegenden Anmeldung als Heizstrecke (24) bezeichnet. Nach einer ausreichenden Temperierung der Vorformlinge (1) werden diese an das Blasrad (25) übergeben, in dessen Bereich Blasstationen (3) angeordnet sind. Für die Übergabe an das Blasrad (25) entnimmt ein Transferrad (35) die Vorformlinge in einem Entnahmebereich von den Transporteinrichtungen (33). Die fertig geblasenen Behälter werden von weiteren Übergaberädern einer Ausgabestrecke (32) zugeführt. In nicht dargestellter Weise kann sich an die Ausgabestrecke (32) ein weiteres oder mehrere weitere Behandlungsaggregate anschließen, z.B. ein Etikettierer, z.B. ein Füller, z.B. ein Verschließer, weitere Beispiele sind denkbar. Dabei kann die Ausgabestrecke (32) z.B. auch in Form von Transferrädern ausgebildet sein und z.B. können die sich anschließenden Behandlungsaggregate in verblockter Weise mit der Blasmaschine verbunden sein.

Um einen Vorformling (1) derart in einen Behälter umformen zu können, dass der Behälter Materialeigenschaften aufweist, die eine lange Verwendungsfähigkeit von innerhalb des Behälters abgefüllten Lebensmitteln, insbesondere von Getränken, gewährleisten, werden spezielle Verfahrensschritte bei der Beheizung und Orientierung der Vorformlinge (1) eingehalten. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind z.B. PET, PEN oder PP.

Die Expansion des Vorformlings (1) während des Orientierungsvorganges erfolgt im gewählten Beispiel durch Druckluftzuführung, unterstützt durch eine Reckstange. Die Druckluftzuführung ist z.B. in eine Vorblasphase, in der Gas, zum Beispiel Druckluft, mit einem niedrigen Druckniveau zugeführt wird, und in eine sich anschließende Fertigblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Fertigblasphase wird Druckluft mit einem Druck im Intervall von 25 bar bis 40 bar zugeführt. Die Fertigblasphase kann z.B. auch aus mehreren Teilphasen bestehen und in jeder dieser Teilphasen kann z.B. Druckluft mit unterschiedlichen Druckniveaus zugeführt werden, z.B. mit äquidistantem Druckabstand.

Aus Fig. 1 ist ebenfalls erkennbar, dass bei der dargestellten Ausführungsform die Umlaufstrecke (20) aus einer Vielzahl umlaufender Transporteinrichtungen (33) ausgebildet ist, die kettenartig aneinandergereiht und entlang von Umlenkrädern (34) geführt sind. Durch die kettenartige Anordnung ist eine im Wesentlichen rechteckförmige Grundkontur aufgespannt. Bei der dargestellten Ausführungsform werden im Bereich der dem Zuführrad (29) und einem Entnahmerad (35) zugewandten Ausdehnung der Umlaufstrecke (20) ein einzelnes relativ groß dimensioniertes Umlenkrad (34), das Kopfrad, und im Bereich von benachbarten Umlenkungen zwei vergleichsweise kleiner dimensionierte Umlenkräder (36) verwendet. Grundsätzlich sind aber auch beliebige andere Umlaufstreckenkonturen denkbar.

Die kettenartig verbundenen Trageinrichtungen (33) laufen um die beschriebenen Umlenkräder (34, 36) und entlang der Umlaufstrecke (20) um. Hierzu kann beispielsweise eines der Umlenkräder, z.B. das Kopfrad (34), oder mehrere der Umlenkräder drehangetrieben ausgeführt sein, z.B. indem ein Motor das Kopfrad (34) antreibt, oder z.B. indem eine mechanische Kopplung an die Drehung des Blasrades (25) erfolgt, welches z.B. über einen Drehantrieb (17) verfügen kann. Das Zuführrad (29) übergibt Vorformlinge (1) auf Trageinrichtungen (33), die in einem Zuführbereich der Umlaufstrecke vorformlingslos ankommen. Von diesem Zuführbereich führen die nunmehr mit einem Vorformling (1) versehenen Trageinrichtungen (33) den Vorformling (1) im Uhrzeigersinn entlang der Umlaufstrecke (20) zunächst in Richtung auf das entfernte Umlenkrad (34), dann um dieses Umlenkrad (34) herum und dann zurück in Richtung auf das Entnahmerad (35). Sobald eine Trageinrichtung (33) mit einem Vorformling (1) in den Entnahmebereich der Umlaufstrecke (20) gelangt, wird der Vorformling (1), der zu diesem Zeitpunkt seine für die Umformung erforderliche Erwärmung erfahren hat, von der Trageinrichtung (33) entfernt bzw. auf das Entnahmerad (35) übergeben und von diesem drehend weitergeführt hin zum Blasrad (25). Die nach diesem Entnahmevorgang vorformlingslose Trageinrichtung (33) läuft entlang der Umlaufstrecke (20) nunmehr vom Entnahmebereich zum Zuführbereich, um dort erneut einen Vorformling (1) aufzunehmen.

Die dargestellten Zuführ- und Entnahmeräder (29) bzw. (35) können z.B. zangenartige Zuführ- bzw. Entnahmemittel aufweisen. Da diese gemeinsam als Transferräder zu bezeichnenden Räder für die vorliegende Erfindung nicht bedeutsam sind, wird auf eine weitere Beschreibung verzichtet. Auch das Blasrad (25) bedarf aus dem gleichen Grund keiner detaillierten Beschreibung. Diese Räder können wie im Stand der Technik in unterschiedlichster Art und Weise bekannt ausgeführt sein.

Nach einem fertigen Blasen der Behälter werden diese von einem Entnahmerad (37) aus dem Bereich der Blasstationen (3) herausgeführt und über das Übergaberad (28) und ein Ausgaberad (38) zur Ausgabestrecke (32) transportiert.

Die vorstehend geschilderten Heizeinrichtungen (30) sind als Heizkästen ausgeführt, in denen NIR-Strahler angeordnet sind. Dies ist lediglich als Beispiel für verwendbare Heizeinrichtungen zu verstehen. Es sind im Stand der Technik eine Vielzahl von Konstruktionen bekannt, die der Temperaturkonditionierung von Vorformlingen dienen und insoweit als Heizeinrichtungen zu bezeichnen sind. Es sind im Stand der Technik auch andere Heizverfahren als Bestrahlung mit IR- oder NIR-Strahlung bekannt, z.B. Beheizung der Vorformlinge durch Mikrowellenbestrahlung. Die Erfindung ist unabhängig vom konkreten Aussehen der Heizeinrichtungen (30) und auch vom konkreten Aussehen der Heizstrecke (24) und der Umlaufstrecke (20).

Auf dem Blasrad (25), das vom Drehantrieb (17) in kontinuierliche Drehung versetzt wird, sind umfangsverteilt mehrere Blasstationen (3) dargestellt. Diese können z.B. aktiv temperiert werden. Dazu weist die in Figur 1 exemplarisch gezeigte Blasmaschine (B) eine erste Versorgungseinrichtung (V1) auf und eine zweite Versorgungseinrichtung (V2) auf. Beide Versorgungseinrichtungen (V1, V2) dienen der Versorgung der Blasstationen (3) mit einem Temperierfluid. Da es bei der vorliegenden Erfindung auf diesen Aspekt nicht ankommt, erübrigt sich eine weitere Beschreibung.

Die Blasmaschine (B) ist durch ein ohne Bezugszeichen gebliebenes Gehäuse gegen die Umgebung abgeschirmt. Das Gehäuse dient einerseits der Sicherheit, ggf. auch dem Lärmschutz, es kann aber andererseits auch so ausgebildet und genutzt werden, innerhalb des Gehäuses eine gewünschte Gasströmung zu erzeugen. So kann z.B. in nicht dargestellter Weise von oben in den von dem Gehäuse umgebenen Raum Reinluft, z.B. getrocknete Reinluft, eingespeist werden und bodenseitig kann ein Absaugen erfolgen. Auf diese Weise kann eine in vertikaler Richtung noch unten gerichtete Strömung von z.B. getrockneter Reinluft erreicht werden, was vorteilhaft ist bezüglich der Verringerung von Verschmutzung oder Verkeimung kritischer Anlagenbereiche. Denkbar ist auch, dass dabei der vom Gehäuse umgebene Raum klimatisiert wird und also z.B. der Feuchtegehalt und/oder die Temperatur der Luft im Gehäuse auf ein gewünschtes Niveau gebracht wird.

Eingangsseitig der bis hierher beschriebenen Blasmaschine (B) befindet sich die Vorformlingseingabe (26), welche z.B. in bekannter Weise als gegen die Horizontale geneigte Einlaufschiene ausgeführt sein kann, auf der zuvor einem Vorformlingsvorrat entnommene Vorformlinge (1) nach deren Ausrichtung und Sortierung in Richtung auf den Einlaufbereich der Blasmaschine (B) gleitend geführt werden. Denkbar wäre auch, dass die Vorformlingseingabe (26) als Horizontalförderer ausgeführt ist, der Vorformlinge in horizontaler Richtung und z.B. durch Anblasen mit antreibender Druckluft zur Blasmaschine (B) führt, ebenfalls nach vorheriger Entnahme aus einem Vorrat und nach Ausrichtung und Sortierung. Es soll also erfindungsgemäß nach einem Zweistufenverfahren gearbeitet werden, d. h. die z.B. spritzgießende Herstellung der Vorformlinge (1) soll nicht unmittelbar vor der Umformung der Vorformlinge in Behälter erfolgen, sondern die Vorformlinge (1) sollen im Vorfeld hergestellt, dann zwischengelagert und anschließend umgeformt werden. Eine typische Ausricht- und Sortiereinrichtung umfasst z.B. einen im Stand der Technik bekannten Rollensortierer. In nicht dargestellter Weise könnte im Bereich der Vorformlingseingabe (26) eine Entstaubungsvorrichtung angeordnet sein.

Eingangsseitig der dargestellten Streckblasmaschine (B) erfolgt zunächst ein Vereinzeln der auf Stoß ankommenden Vorformlinge (1). Sodann kann sich z.B. eine Vorrichtung zum Beseitigen von Verunreinigungen aus dem Inneren der Vorformlinge anschließen, zu der nachfolgend eine detailliertere Beschreibung zu Ausführungsbeispielen erfolgt. Vereinfachend wird nachfolgend diese Vorrichtung als Entstaubungsrad bezeichnet, weil sich das dargestellte Beispiel auf den Sonderfall eines umlaufenden Transportrades bezieht, auf dem das Entstauben erfolgt. Denkbar ist, dass vor dem Entstauben zunächst noch eine andere Bearbeitung oder Handhabung der Vorformlinge erfolgt, z.B. ein Inspizieren auf Fehlerfreiheit und gegebenenfalls ein Auswerfen als fehlerhaft erkannter Vorformlinge. Denkbar ist auch, dass z.B. nach dem Entstauben eine weitere Bearbeitung oder Handhabung der Vorformlinge erfolgt, bevor diese in die Heizvorrichtung (H) einlaufen. Das besagte Inspizieren auf Fehlerfreiheit und das besagte Auswerfen könnte auch zeitlich nach dem Entstauben erfolgen. Denkbar ist auch, dass eine Sterilisierung der Vorformlinge folgt, wobei das Sterilisieren bevorzugt zeitlich nach dem Entstauben erfolgt, da Staub für das Sterilisieren abträglich wäre.

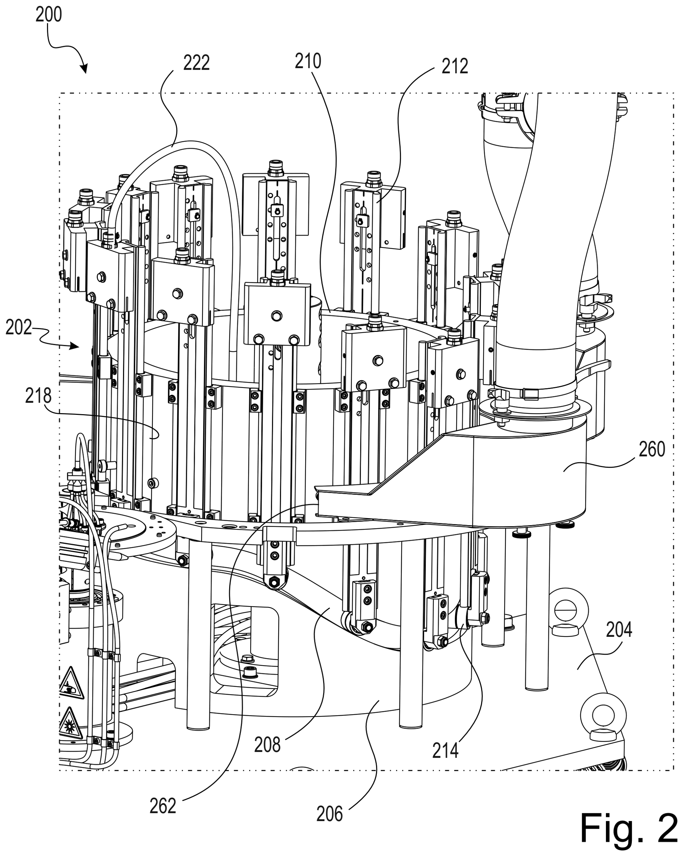

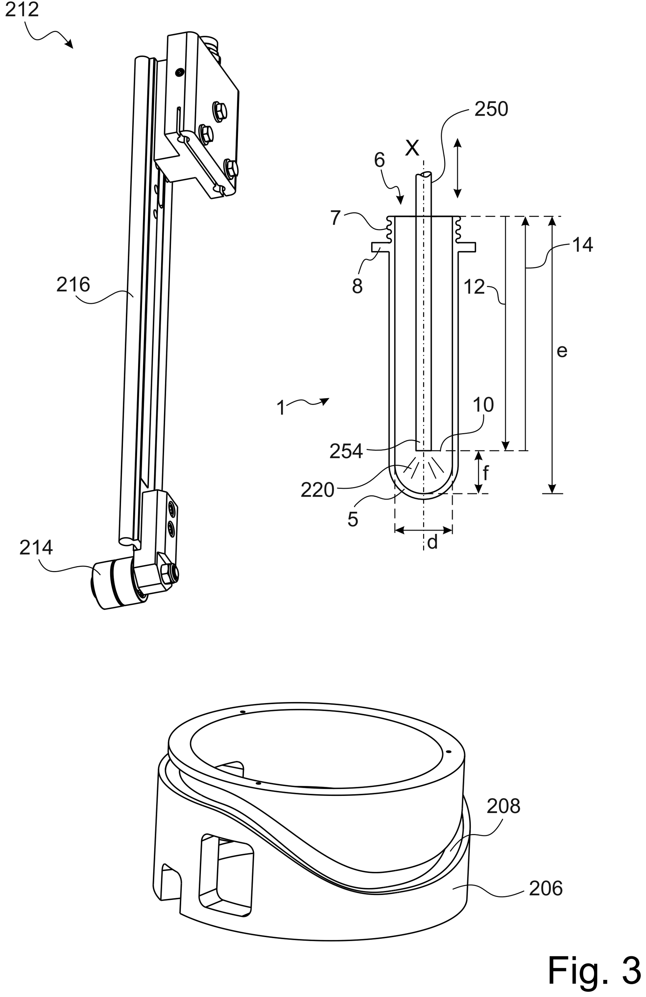

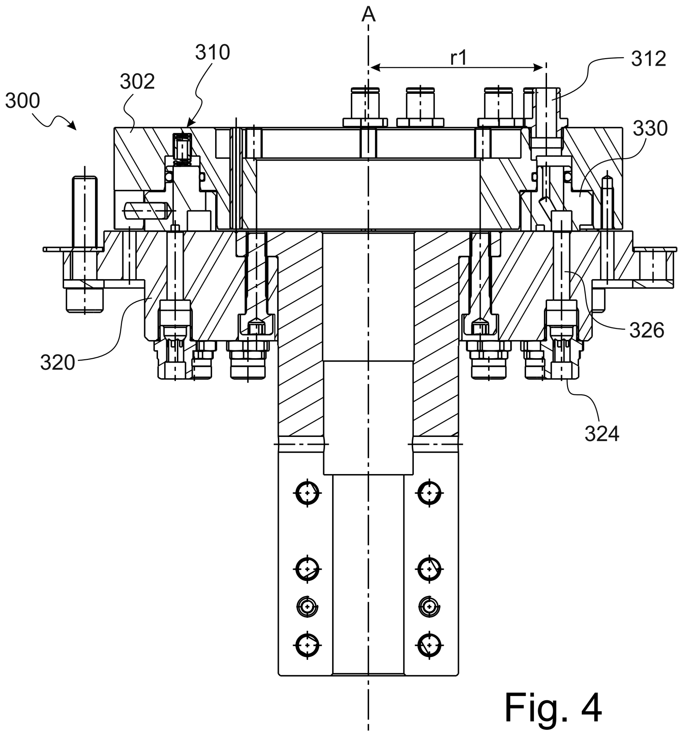

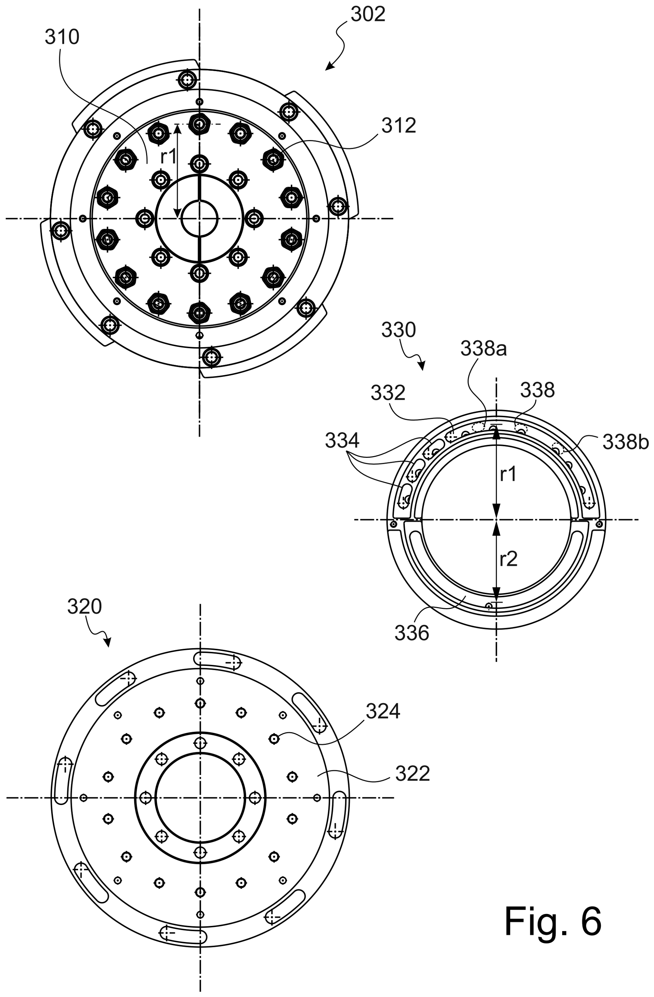

Figur 2 zeigt in einer perspektivischen Ansicht eine Entstaubungsvorrichtung in der Form eines Entstaubungsrades (200), also eine Entstaubungsvorrichtung mit einem drehenden Transportrad (202), auf dem die Vorformlinge (1) umlaufend geführt werden und während des Umlaufs auf dem Transportrad (202) einer Entstaubungsbehandlung unterzogen werden. Einzelne Elemente dieser Entstaubungsvorrichtung (200) sind in Figur 3 dargestellt, die Figuren 4-6 zeigen in Schnittansichten bzw. die Figur 6 in Aufsichten von oben und unten ebenfalls weitere Details eines Beispiels für das zeitlich koordinierte Versorgen der Spüllanzen (250) mit Spülgas während eines Umlaufs auf dem Entstaubungsrad (200) und während der dadurch kurvengesteuert ausgeführten Spüllanzenbewegung.

Das in Figur 2 gezeigte Entstaubungsrad (200) besteht aus einer ortsfest auf einem Maschinengestell (204) angeordneten Steuerkurveneinheit (206). Diese Steuerkurveneinheit (206) weist eine hohlzylindrische Grundform auf mit einer in der äußeren Zylinderoberfläche eingearbeiteten Steuerkurve (208). Innerhalb des Hohlzylinders bzw. der Steuerkurveneinheit (206) ist drehbar um eine Drehachse (A) gelagert und drehangetrieben ein Tragring (210) angeordnet, an dessen Außenumfang und umfangsverteilt mehrere Spüllanzenträger (212) angeordnet sind. An ihrem unteren Ende weisen diese Spüllanzenträger (212) jeweils eine Kurvenrolle (214) als Abnehmer auf, welche jeweils umlaufend entlang der Steuerkurve (208) geführt ist, sodass der in vertikaler Richtung beweglich gelagerte Lanzenträger (212) dem Höhenverlauf der Steuerkurve (208) folgend in vertikaler Richtung aufwärts und abwärts bewegt werden kann bzw. während eines Umlaufs zwischen einer oberen und einer unteren Endposition auf und ab bewegt wird. Für diese vertikale Beweglichkeit und für eine sichere und reproduzierbare Bewegung weist der Lanzenträger (212) seitliche Führungskonturen (216) auf, welche in vertikalen, formkomplementären Führungsschienen (218) des Tragringes (210) gleitend angeordnet sind. In nicht dargestellter Weise ist an jedem der Lanzenträger (212) eine Spüllanze (250) angeordnet, welche der Bewegung des Lanzenträgers (212) starr folgt. Beherrscht von einer später noch zu beschreibenden Verschlusseinrichtung ist jeder der Lanzenträger (212) über eine jeweilige Spülgasleitung (222) mit Spülgas versorgbar, indem eine Fluidverbindung zu einer nicht gezeigten Spülgasquelle hergestellt oder unterbrochen wird. Die Spüllanze (250) ist dabei so am Lanzenträger (212) angeordnet, dass zu dem Lanzenträger (212) geführtes Spülgas in das Spüllanzeninnere gelangt, durch die Lanze (250) zu deren Spitze (254) strömt und dann im Bereich der Lanzenspitze (254) in Richtung auf den Vorformlingsboden (5) abgeblasen wird.

Der in Figur 3 dargestellte Vorformling (1) weist einen Innendurchmesser (d) auf und eine Höhenerstreckung (e). Der Weg von der Mündungsöffnung (6) des Vorformlings (1) bis zum Umkehrpunkt (10) der Lanzenbewegung definiert die Einführstrecke (12), der umgekehrte Weg definiert die Rückführstrecke (14). Bodenseitig der Mündungsöffnung (6) ist in bekannter Weise ein Außengewinde (7) dargestellt für das Aufschrauben eines Schraubverschlusses sowie ein sogenannter Neckring (8), an den z.B. zu Handhabungszwecken Zangen angreifen oder der auf Führungsschienen gleitet. In der Darstellung der Figur 3 hat die Spüllanze (250) gerade den sogenannten Umkehrpunkt (10) erreicht, welcher in einem Höhenabstand (f) entfernt vom Vorformlingsboden (5). liegt. Im gezeigten Beispiel soll dieser Abstand zwischen dem 1,5-2,5-fachen des Vorformlingsdurchmessers (d) betragen.

Während eines Umlaufs des Tragringes (210) vollzieht der Lanzenträger (212) ausgehend von einer oberen Ausgangsposition eine Abwärtsbewegung zu einer unteren Position, die dem in Figur 3 gezeigten Umkehrpunkt (10) entspricht, und nachfolgend eine Aufwärtsbewegung zurück in die obere Ausgangsposition. Dabei ist die obere Ausgangsposition höhenbeabstandet zur Mündungsöffnung (6) und in der oberen Ausgangsposition ist die Spüllanze (250) vollständig aus dem Vorformling (1) herausgefahren und die Lanzenspitze (254) steht höhenbeabstandet von der Mündungsöffnung (6), sodass der Vorformling (1) von Handhabungsmitteln handhabbar ist, z.B. von zangenartigen Handhabungsmitteln, und in seitlicher Richtung entnommen oder auf das Entstaubungsrad (200) übergeben werden kann.

In Figur 2 ist am rechten Bildrand eine Absaugeinrichtung (260) erkennbar, welche eine Absaugöffnung (262) aufweist. Diese Absaugöffnung ist im gezeigten Beispiel als länglich gekrümmter Absaugschlitz (262) ausgeführt, wobei dieser Schlitz außenseitig des umlaufend bewegten Lanzenträgers (212) angeordnet ist auf einer der Mündungsöffnung der Vorformlinge zugeordneten Höhe und über einen derartigen Umfangswinkel längenerstreckt und so höhenerstreckt, dass einerseits der Mündungsbereich (6, 7, 8) der vorbeigeführten Vorformlinge (1) absaugend beaufschlagt wird und andererseits die Absaugwirkung zuverlässig einsetzt, bevor Spülgas aus der Spüllanze (250) austritt, wobei die Absaugwirkung bevorzugt anhält bis kurz nach Beendigung des Austretens von Spülgas aus der Spüllanze (250). Der Absaugschlitz (262) kann z.B. im Umfangsrichtung mehrteilig ausgeführt sein. Eine nicht dargestellte Absaugpumpe stellt die erforderliche Saugleistung zur Verfügung. Für eine möglichst gleichmäßige Absaugleistung ist bevorzugt vorgesehen, dass der Absaugschlitz (262) mit einem möglichst gleichbleibenden und geringen Abstand in radialer Richtung außen und auf gleichbleibender Höhe zur Vorformlingsmündung (6) der Umlauftrajektorie der Vorformlinge (1) folgend gekrümmt ausgebildet und angeordnet ist. Die Vorformlinge (1) bleiben im gezeigten Beispiel während ihres Umlaufs auf dem Entstaubungsrad (200) auf einer festen Fördererhöhe und die Höhenbewegung des Lanzenträgers (212) führt daher dazu, dass eine daran befestigte Spüllanze (250) in den Vorformling (1) eintaucht und später wieder herausgezogen wird. Die technische Realisierung des Transports der Vorformlinge (1) auf dem Entstaubungsrad (200) sowie die Übergabe- und Entnahmevorgänge sind für die Erfindung nicht wesentlich und werden daher nachfolgend nicht näher beschrieben. Das Rad (202) könnte z.B. Aufnahmetaschen für die Vorformlinge (1) aufweisen, welche mit einer radial außen verlaufenden Führungsschiene zusammenwirken, um die Vorformlinge (1) umlaufend auf einer konstanten Umlaufhöhe zu führen. Das Rad (202) ist zu einer kontinuierlichen Drehung drehangetrieben und in einem Einlaufbereich werden Vorformlinge (1) auf das Rad (202) übergeben. Während eines Umlaufs des Rades (202) wird vorgegeben durch die Steuerkurve (208) die Spüllanze (250) bzw. die Spüllanzenspitze (254) in den Vorformling (1) entlang der Einführstrecke (12) hineingefahren bis zum Umkehrpunkt (10) und anschließend, ebenfalls vorgegeben durch die Steuerkurve (208), entlang der Rückführstrecke (14) wieder aus dem Vorformling (1) herausbewegt. Erfindungsgemäß setzt der Spülgasstrom (220) zu einem bestimmten Zeitpunkt ein, z.B. zu einem Zeitpunkt, zudem die Spüllanze (250) bzw. deren Spitze (254) bereits mehr als 50 % der Einführstrecke (12), bevorzugt mehr als 75 %, zurückgelegt hat. Der Spülgasstrom (220) wird auch zumindest während einer Teilbewegung der Spülstange (250) entlang der Rückführstrecke (14) aufrechterhalten, d. h. auch während der Herausbewegung der Spüllanze (250) tritt wenigstens zeitweise Spülgas aus deren Spitze (254) in Bodenrichtung aus. Erfindungsgemäß ist vorgesehen, dass der Spülgasstrom (220) wenigstens einmal abgeschwächt wird, bevorzugt wird er unterbrochen, und er danach wieder anschwillt bzw. wieder neu einsetzt. Dies kann mehrfach erfolgen, z.B. zunächst zu einem Zeitpunkt, zu dem die Lanzenspitze (254) wenigstens 80 % der Einführstrecke (12), bevorzugt wenigstens 90 % der Einführstrecke (12) zurückgelegt hat, und erneut, wenn die Lanzenspitze maximal 20 %, bevorzugt maximal 10 % der Rückführstrecke 14 zurückgelegt hat. Besonders bevorzugt erfolgt die Unterbrechung bzw. Abschwächung zusätzlich oder alternativ zu einem Zeitpunkt, zudem die Lanzenspitze (254) den Umkehrpunkt (10) erreicht hat und also den minimalen Abstand (f) zum Boden (5) des Vorformlings (1) aufweist.

Erfindungsgemäß ist vorgesehen, dass nach dem ersten Einsetzen des Abblasens des Spülgases der Spülgasstrom (220) unterbrochen wird, mindestens aber abgeschwächt wird. Nach der Unterbrechung bzw. nach dem Abschwächen soll der Spülgasstrom (220) erneut einsetzen bzw. nach dem Abschwächen soll der Spülgasstrom (220) wieder mindestens auf seine vorherige Stärke zurückgeführt werden. Dies könnte ventilbeherrscht durch Magnetventile oder Pneumatikventile realisiert werden, welche z.B. von magnetischen Pilotventilen angesteuert sind. Mit Vorteil ist aber vorgesehen, dass die zu den Figuren 4-6 beschriebene mechanische Verschlusseinrichtung (300) eingesetzt wird.

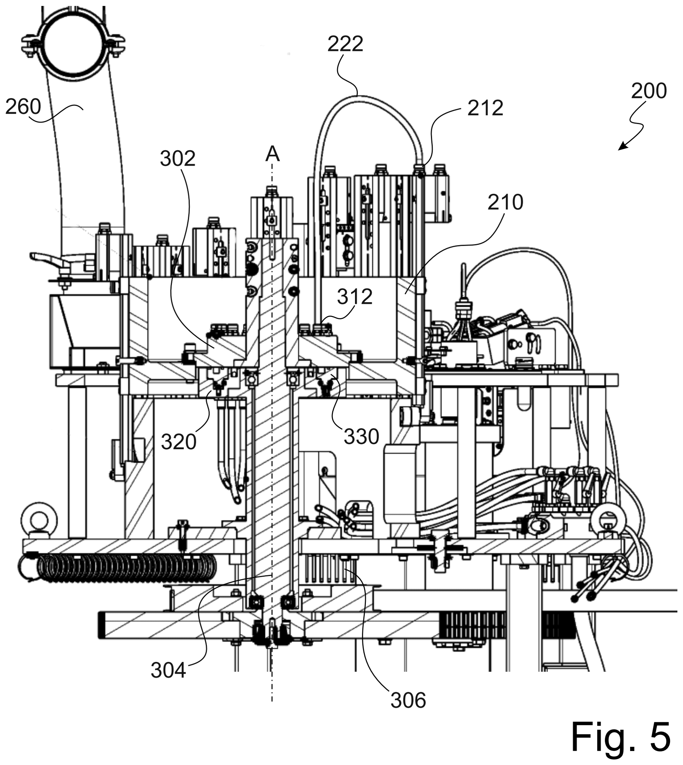

Die in den Figuren 4-6 gezeigte Verschlussvorrichtung (300) ist im Zentrum der in Figur 2 dargestellten Entstaubungsvorrichtung (200) bzw. im Zentrum des Entstaubungsrades (202) angeordnet in der Art einer Drehdurchführung. Die Verschlussvorrichtung (300) besteht aus einer oberen Verteilerscheibe (302), welche drehend mit der Entstaubungsradachse 304) verbunden ist, wobei diese Entstaubungsradachse (304) drehangetrieben mit einem nicht dargestellten Drehantrieb verbunden ist und um eine Raumachse (A) dreht. Dazu kämmt z.B. ein Antriebsritzel (306) mit einem Abtriebsritzel des Drehantriebsmotors. Denkbar ist auch, dass die Drehung des Entstaubungsrades (202) bewegungsgekoppelt ist mit einem anderen drehenden Rad, das einen Drehantrieb aufweist, z.B. mit einem der zu Figur 1 erläuterten Transferräder (27, 28, 29). Diese obere Verteilerscheibe (302) weist eine Scheibenoberseite (310) und eine Scheibenunterseite auf. Auf der Scheibenoberseite (310) sind Spülgasausgänge (312) angeordnet, z.B. in Form von Anschlussbuchsen, und in Figur 5 ist eine einzelne Spülgasleitung (222) eingezeichnet, welche von der Verteilerscheibenoberseite (310) zu einem Spüllanzenhalter (212) verläuft. Diese obere Verteilerscheibe (302) dreht in abgedichteter Weise um die Drehachse (A) auf einer unteren Zuführscheibe (320). Auf der Oberseite der Zuführscheibe (320) ist lösbar und austauschbar eine Dichtscheibe (330) befestigt. Auf der Unterseite (322) der Zuführscheibe (320) sind Schlauchanschlüsse (324) für das Zuführen des Spülgases angeordnet, also z.B. Druckluftanschlüsse. Über die Dickenerstreckung der Zuführscheibe (320) verlaufen Bohrungen (326), sodass die Druckluft von den Anschlüssen (324) zur Oberseite der Zuführscheibe (320) verlaufen bis zu Unterseite der Dichtscheibe (330).

In Figur 6 ist oben links in einer Aufsicht die obere Verteilerscheibe (302) dargestellt. Entsprechend der in Figur 2 gezeigten vierzehn Lanzenhalter (212) weist diese obere Verteilerscheibe (302) vierzehn Spülgasanschlüsse (312) auf, wobei jeder dieser Spülgasanschlüsse (312) einem der Lanzenträger (212) zugeordnet ist und dazwischen eine Spülgasleitung (222) verläuft. Radial innenseitig und radial außenseitig davon sind Montagezwecken dienende Schrauben zu erkennen. Die Spülgasanschlüsse (312) sind umfangsbeabstandet und äquidistant kreisförmig mit Radius r1 um die geometrische Drehachse (A) herum angeordnet.

Die untere Abbildung in Figur 6 zeigt die Zuführscheibe (320) in einer Ansicht von unten mit mehreren Anschlussbuchsen (324) für Spülgas, z.B. für Druckluft, welche z.B. von einem nicht dargestellten Kompressor bereitgestellt wird. Die Druckluft könnte alternativ oder zusätzlich auch recyceltes Blasgas sein, welches aus fertig geblasenen Behältern abgelassen wird, z.B. in einen zwischengeschalteten Druckgasspeicher hinein, welcher z.B. leitungsverbunden sein kann mit einem Kompressor, z.B. um eine Anfangsbefüllung zu gewährleisten, nämlich bevor erste Behälter umgeformt und erstes Blasgas recycelt werden kann. Bodenseitig können Spülgasleitungen an die Anschlussbuchsen (324) angeschlossen werden, sodass die Zuführscheibe (320) von der Spülgasquelle spülgasbeaufschlagt wird, z.B. von besagtem Druckgasspeicher. Von der Boden- bis zur Oberseite der Zuführscheibe (320) verlaufen in vertikaler Richtung Bohrungen (326), sodass das von der Spülgasquelle kommende Spülgas bis zur Oberseite der Zuführscheibe (320) gelangen kann.

Im Bereich der Austrittsöffnungen der Bohrungen (326) auf der Oberseite der Zuführscheibe (320) ist eine Dichtscheibe (330) lösbar befestigt. Ein Ausführungsbeispiel für eine solche Dichtscheibe (330) ist auf der mittleren Abbildung in Figur 6 gezeigt. In der oberen Hälfte der Dichtscheibe ist ein mit Krümmungsradius (r1) gekrümmtes, nierenförmiges Langloch (332) zu erkennen, dem sich im entgegengesetzten Uhrzeigersinn mehrere kürzere Langlöcher (334) anschließen. In der unteren Hälfte ist ein radial weiter innenliegendes nierenförmiges Langloch (336) zu erkennen mit Krümmungsradius (r2), (r1) ist größer (r2). Alle diese Langlöcher (332, 334, 336) stehen in Fluidverbindung mit den Spülgasaustrittsöffnungen der Bohrungen (326) auf der Oberseite der Zuführscheibe (320). Figur 4 zeigt den zusammengesetzten Zustand dieser drei Scheiben (302, 320, 330) und diese Figur 4 zeigt, dass bei bestimmten Drehstellungen zwischen der Zuführscheibe (302) und der Dichtscheibe (330) Spülgas zu denjenigen Spüllanzen (212) gelangen kann, deren zugeordnete Anschlussstutzen (312) fluidverbunden zu den nierenförmigen Langloches (332) angeordnet sind. Da das Ausführungsbeispiel vertikale verlaufende Durchgangsbohrungen aufweist, wird nachfolgend vereinfachend davon gesprochen, dass sich die Anschlussstutzen und das Langloch (332) in vertikaler Richtung überlappen bzw. sich überdecken. Verlassen die Anschlussstutzen (312) den Bereich des nierenförmigen Langloches (332), ist also die Überdeckung aufgehoben, so kann kein Spülgas zu den Spüllanzen (212) gelangen und der Spülgasstrom (220) bricht ab. Die links des nierenförmigen Langloches (332) angeordneten kürzeren Langlöcher (334) lassen sich mit nicht gezeigten Abdeckmitteln verdecken und dienen dazu, z.B. für Vorformlinge (1) größerer Länge eine Anpassung vorzunehmen und z.B. eine zeitlich verlängerte Versorgung mit Spülgas zu gewährleisten.

Das lang gezogene nierenförmige Langloch (332) weist in einem bestimmten Bereich einen Steg (338) auf, der so breit gewählt ist, dass bei Überfahren dieses Steges (338) eine Anschlussbuchse (312) und der zugeordnete Lanzenträger (212) kurzzeitig nicht mehr mit Spülgas versorgt sind. Entsprechend kommt der aus der zugeordneten Spüllanze (212) austretende Spülgasstrom (220) kurzzeitig zum Erliegen und setzt in dem Moment neu ein, zu dem der Anschlussstutzen (312) den Stegbereich (338) wieder verlässt und wieder mit Spülgas versorgt ist. Gestrichelt sind zwei weitere Stegbereiche (338a) und (338b) eingezeichnet. Der Stegbereich (338) soll überstrichen werden, wenn die Lanzenspitze (254) den Umkehrpunkt (10) einnimmt. Entsprechend werden die Stegbereiche (338a) und (338b) überstrichen vor Erreichen des Umkehrpunktes (10) und nach Erreichen des Umkehrpunktes (10). Die beiden gestrichelten Stegbereiche (338a, 338b) sind gleichbeabstandet vom Stegbereich (338), sodass die Lanzenspitze (254) bei der jeweils eintretenden Unterbrechung die gleiche Beabstandung vom Boden (5) des Vorformlings (1) haben.

Das beschriebene Langloch (332) mit den Stegbereichen (338, 338a, 338b) ist technisch und in seiner Wirkung nicht zu unterscheiden von mehreren Langlöchern, die durch Zwischenstege voneinander getrennt sind. Da aber die Beschreibung als Gesamtlangloch mit Stegbereichen als einfacher angesehen wird, wurde diese Art der Beschreibung gewählt, wobei aber die technisch davon nicht zu unterscheidende Variante mit umfasst ist. Bei der Herstellung wird man z.B. das Langloch ausfräsen und die Stege dabei z.B. stehen lassen.

Die in den Figuren 2 und 3 gezeigte Steuerkurveneinheit (206) mit der Steuerkurve (208) und die zu den Figuren 4-6 gezeigte Verschlusseinrichtung (300) sind so zueinander ausgerichtet, dass bei Erreichen einer bestimmten Höhenpositionierung einer Spüllanze (250) der zugeordnete Spülgasstutzen (312) in vertikaler Verlängerung oberhalb des nierenförmigen Langloches (332) und also fluidverbunden und somit spülgasversorgt ist. Diese Beschreibung geht vereinfachend davon aus, dass in der Verteilerscheibe (302) das Spülgas in Dickenrichtung geführt wird. Dies ist strömungstechnisch bevorzugt. Wird aber eine Spülgasführung in der Verteilerscheibe (302) mit Richtungskomponente auch quer zur Dickenrichtung gewählt, so ist die obige Aussage dahingehend zu modifizieren, dass ein entsprechender Querversatz zwischen Position des Spülgasstutzens (312) und Langloch (232) zu berücksichtigen ist.

Der Steg (338), der dieses Langloch (332) unterteilt, ist z.B. so angeordnet, dass der entsprechende Anschlussstutzen (312) einer Spüllanze (250) den Steg (338) dann überfährt, wenn die Spüllanzenspitze (254) ihren Umkehrpunkt (10) erreicht, also der niedrigste Punkt der Steuerkurve (208) von der Steuerrolle (214) durchlaufen wird. Die in der allgemeinen Beschreibung genannten bevorzugten Bereiche, zu denen der Spülgasstrom (220) einsetzt, endet, unterbricht und/oder neu einsetzt, lassen sich entsprechend durch die Dimensionierung des Langloches (332) in der Dichtscheibe (330) und der Stegbereiche (338, 338a, 338b) und der Ausrichtung der Dichtscheibe (330) zur Führungskurve (208) geeignet einstellen und auswählen. Soweit die sich daraus ergebenden Zeitpunkte und Zeitdauern verändert werden sollen, kann z.B. die Dichtscheibe (330) in Figur 6 gegen eine andere Dichtscheibe ausgetauscht werden oder es können z.B. die genannten Abdeckmittel entfernt oder zusätzliche Abdeckmittel hinzugefügt werden.

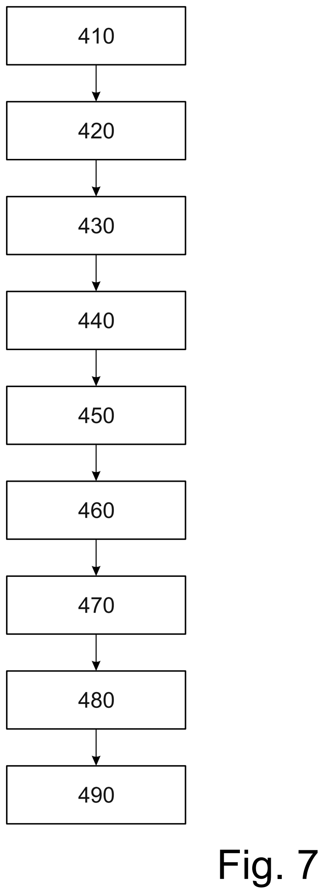

Ein typischer Ablauf in einem Entstaubungsverfahren bzw. auf einer Entstaubungsvorrichtung, auf der ein solches Entstaubungsverfahren abläuft, lässt sich anhand Figur 7 darstellen. Zunächst wird ein vereinzelter Vorformling (1) auf das Entstaubungsrad (200) übergeben, siehe verfahrensschritt mit Bezugsziffer (410). Mit Bezugsziffer (420) ist der Verfahrensschritt angegeben, dass bei Weiterdrehen des Entstaubungsrades (200) die Spüllanze (250) aus einer Ausgangspositionierung abgesenkt wird und durch die Vorformlingsmündung (6) in das Vorformlingsinnere eintaucht. (430) bezeichnet den Verfahrensschritt des weiteren Absenkens der Spüllanze (250) entlang der Einführstrecke (12). Bei Erreichen eines bestimmten Höhenabstandes zum Vorformlingsboden (5) öffnet bei verfahrensschritt (440) die Verschlussvorrichtung (300) und Spülgas tritt aus der Spüllanze (250) aus, so dass ein Spülgasstrom (220) das Vorformlingsinnere in Richtung auf den Vorformlingsboden (5) beaufschlagt. Bei Verfahrensschritt (450) erreicht im dargestellten Beispiel die Lanzenspitze (254) den Umkehrpunkt (10) und durch Bezugsziffer (460) ist als Verfahrensschritt angegeben, dass gleichzeitig der Zeitpunkt erreicht ist, zu dem der Spülgasstrom (220) untergebrochen wird, z.B., weil der entsprechende Lanzenanschlussstutzen (312) den zu Figur 6 erklärten Trennsteg (338) erreicht hat und also die Fluidverbindung unterbrochen ist. Das Weiterdrehen des Entstaubungsrades (200) bewirkt einerseits, dass die Spüllanze eine Aufwärtsbewegung vom Umkehrpunkt (10) in Richtung auf den Mündungsbereich (6) ausführt, siehe Verfahrensschritt (470) und gleichzeitig der Anschlussstutzen (312) der Spüllanze (250) den Stegbereich (338) der Dichtscheibe (330) verlässt und also erneut ein Spülgasstrom (220) aus der Spüllanzenspitze (254) austritt. Bei Erreichen eines bestimmten Höhenabstandes oberhalb des Vorformlingsbodens (5) verlässt dann der Anschlussstutzen (312) das nierenförmige Langloch (332) der Dichtscheibe (330) und der Spülgasstrom (220) kommt zum Erliegen, Verfahrensschritt (480). Bei Weiterdrehen des Entstaubungsrades (202) gelangt dann die Spüllanzenspitze (254) auf Höhe der Mündungsöffnung (6) und wird dann weiter abgehoben in ihre Ausgangsposition, Verfahrensschritt (490), sodass der Vorformling (1) entnommen und ein neuer Vorformling (1) eingesetzt werden kann, sodass der vorstehend beschriebene Ablauf erneut vollzogen werden kann.

Dieser beschriebene Ablauf findet in der beschriebenen Weise zeitversetzt für alle z.B. zu Figur 2 dargestellten Spüllanzen (250) statt. Es sind gleichzeitig mehrere der Spüllanzen (250) über das Langloch (332) fluidverbunden mit dem Druckgasspeicher und es sind gleichzeitig mehrere diametral dazu positionierte Spüllanzen (250) ohne Fluidverbindung zum Druckgasspeicher. Zur Kompensation eines sich daraus ergebenden Kippmomentes ist diametral gegenüberliegend zu dem nierenförmigen Langloch (332) auf einem kleineren Radius (r2) ein ebenfalls nierenförmiges Langloch (336) vorgesehen, das ebenfalls fluidverbunden zum Druckgasspeicher ist, dem aber wegen der kleineren Radius (r2 < r1) keine Austrittsöffnungen an der Zuführscheibe (302) zugeordnet sind, d. h. in diesem Bereich wirkt kontinuierlich Druckluft auf die drehende Zuführscheibe (302) ein und dadurch ein Gegenmoment.

### Bezugszeichenliste

- A: - Drehachse
- B: - Blasmaschine
- F1, F2: - 1., 2. Fluidkreislauf
- H: - Heizvorrichtung
- R: - Umlaufrichtung
- T1: - Temperiereinrichtung
- T2: - Temperiereinrichtung
- V1: - 1. Versorgungseinrichtung
- V2: - 2. Versorgungseinrichtung
- X: - Längsachse
- d: - Innendurchmesser
- e: - Höhenerstreckung
- f: - Höhenabstand
- r1: - Radius 1
- r2: - Radius 2

- 1: - Vorformling
- 2: - Behälter
- 3: - Blasstation
- 4: - äußere Form
- 5: - Boden Vorformling
- 6: - Mündungsöffnung
- 7: - Außengewinde
- 8: - Neckring
- 10: - Umkehrpunkt
- 12: - Einführstrecke
- 14: - Rückführstrecke
- 20: - Umlaufstrecke
- 24: - Heizstrecke
- 25: - Blasrad
- 26: - Vorformlingseingabe
- 27, 28, 29: - Übergaberäder
- 30: - Heizeinrichtungen
- 31: - Gebläse
- 32: - Ausgabestrecke
- 33: - Transporteinrichtung
- 34: - Umlenkrad
- 35: - Transferrad
- 36: - Umlenkrad
- 37: - Entnahmerad
- 38: - Ausgaberad
- 50: - Drehverteiler
- 100: - Steuereinrichtung
- 200: - Entstaubungsrad
- 202: - Transportrad
- 204: - Maschinengestell
- 206: - Steuerkurveneinheit
- 208: - Steuerkurve
- 210: - Tragring
- 212: - Lanzenträger
- 214: - Kurvenrolle
- 216: - Führungskontur
- 218: - Führungsschiene
- 220: - Spülgasstrom
- 222: - Spülgasleitung
- 250: - Spüllanze
- 254: - Lanzenspitze
- 260: - Absaugeinrichtung
- 262: - Absaugöffnung

- 300: - Verschlusseinrichtung
- 302: - Verteilerscheibe
- 304: - Radachse
- 306: - Antriebsritzel
- 310: - Scheibenoberseite
- 312: - Anschlussstutzen
- 320: - Zuführscheibe
- 324: - Anschlussstutzen
- 326: - Durchgangsbohrung
- 330: - Dichtscheibe
- 332: - Langloch
- 334: - Langloch
- 336: - Langloch
- 338: - Steg
- 338a, 338b: - Steg

- 410: - Schritt 1
- 420: - Schritt 2
- 430: - Schritt 3
- 440: - Schritt 4
- 450: - Schritt 5
- 460: - Schritt 6
- 470: - Schritt 7
- 480: - Schritt 8
- 490: - Schritt 9

## Patentansprüche

1. Verfahren zur Beseitigung von Verunreinigungen, insbesondere von Staub, aus dem Inneren von Vorformlingen (1), welche als Hohlkörper mit einem endseitig geschlossenen Boden (5) und dem Boden (5) gegenüberliegend mit einer endseitigen Mündungsöffnung (6) ausgebildet sind, wobei der Vorformling (1) eine Längsachse (X) aufweist, die vom Boden (5) bis zur Mündungsöffnung (6) verläuft und welche bevorzugt raumdeckungsgleich mit einer Drehsymmetrieachse des Vorformlings ist, wobei das Beseitigen von Verunreinigungen erfolgt, indem eine Spüllanze (250) durch die Mündungsöffnung (6) in das Vorformlingsinnere und in Richtung auf den Boden (5) des Vorformlings (1) hineinbewegt und nach Erreichen eines Umkehrpunktes (10) wieder aus dem Vorformling (1) herausbewegt wird, wobei wenigstens auf einer Teilstrecke dieser Bewegung aus der Spüllanze (250) Spülgas als Spülgasstrom (220) in Richtung auf den Boden (5) abgeblasen wird, **dadurch gekennzeichnet, dass** der Spülgasstrom (220), der aus der Spüllanze (250) abgeblasen wird, wenigstens einmal nach dem Beginn des Abblasens intensitätsverändert wird, insbesondere abgeschwächt wird, insbesondere unterbrochen wird, und nach der Veränderung, insbesondere nach der Abschwächung, insbesondere nach der Unterbrechung, der Spülgasstrom (220) wieder zurückverändert wird, insbesondere anschwillt, insbesondere wieder neu einsetzt.

2. Verfahren nach Anspruch 1, **dadurch gekennzeichnet, dass** das Beseitigen von Verunreinigungen erfolgt, während die Vorformlinge (1) auf einem drehenden Transportrad (202) geführt sind, welches in Förderrichtung der Vorformlinge (1) vor einer Umformungseinrichtung (25) angeordnet ist, in der die Vorformlinge (1) zu Behältern umgeformt werden, wobei die Bewegung der Spüllanze (250) bevorzugt kurvengesteuert ausgeführt wird.

3. Verfahren nach Anspruch 1 oder 2, **dadurch gekennzeichnet, dass** das Intensitätsverändern, insbesondere das Abschwächen des Spülgasstroms (220), insbesondere das Unterbrechen, wenigstens einmal bodennah erfolgt, insbesondere im Bereich der letzten 20 %, bevorzugt der letzten 10 % des Weges der Spüllanze (250) zum Boden (5) hin, nämlich der Einführstrecke (12), und/oder im Bereich der ersten 20 %., bevorzugt der ersten 10% des Weges der Spüllanze (250) weg vom Boden (5), nämlich der Rückführstrecke (14), bevorzugt bei Erreichen des Umkehrpunktes (10).

4. Verfahren nach einem der vorhergehenden Ansprüche, **dadurch gekennzeichnet, dass** der Spülluftstrom (220) mehrfach intensitätsverändert wird, insbesondere mehrfach abgeschwächt wird, insbesondere mehrfach unterbrochen wird.

5. Verfahren nach einem der vorhergehenden Ansprüche, **dadurch gekennzeichnet, dass** der Spülluftstrom (220) erst einsetzt, nachdem die Spüllanze (250) durch die Mündungsöffnung (6) in das Vorformlingsinnere eingedrungen ist, insbesondere nachdem mehr als 50% des Weges zum Boden (5) hin, nämlich der Einführstrecke (12), zurückgelegt sind, insbesondere mehr als 75%, und der Spülluftstrom (220) bereits einsetzt, bevor die Spüllanze (250) seinen bodennahen Umkehrpunkt (10) erreicht hat, insbesondere bereits einsetzt, wenn der Lanzenspitzenabstand zum Boden (5) weniger als der achtfache Innendurchmesser (d) des Vorformlings (1), bevorzugt weniger als der vierfache Innendurchmesser (d) des Vorformlings (1) beträgt.

6. Verfahren nach einem der vorhergehenden Ansprüche, **dadurch gekennzeichnet, dass** ein Absaugen des den Vorformling (1) verlassenden Spülgases durch eine radial außen von der Vorformlingsmündung (6) angeordnete Saugöffnung (262) erfolgt, wobei das Absaugen bevorzugt gleichzeitig mit dem Einblasen oder zeitlich früher als das Einblasen des Spülgases einsetzt, wobei das Absaugen bevorzugt gleichzeitig mit oder kurz nach dem Beenden des Einblasens wieder endet.

7. Vorrichtung (200) zur Beseitigung von Verunreinigungen, insbesondere von Staub, aus dem Inneren von Vorformlingen (1), welche als Hohlkörper mit einem endseitig geschlossenen Boden (5) und dem Boden (5) gegenüberliegend mit einer endseitigen Mündungsöffnung (6) ausgebildet sind, wobei der Vorformling (1) eine Längsachse (X) aufweist, die vom Boden (5) bis zur Mündungsöffnung (6) verläuft und welche raumdeckungsgleich mit einer Drehsymmetrieachse des Vorformlings (1) ist, wobei die Vorrichtung (200) eine beweglich angeordnete Spüllanze (250) aufweist, welche für das gesteuerte Ablassen eines Spülgasstromes (220) fluidverbunden mit einer Spülgasquelle ist, wobei die Vorrichtung eine diese Fluidverbindung beherrschende Verschlusseinrichtung (300) aufweist, welche mindestens zwei den Querschnitt der Verbindung unterschiedlich verändernde Stellungen einnehmen kann, insbesondere eine die Verbindung öffnende und eine die Verbindung sperrende Stellung einnehmen kann, wobei die Spüllanze (250) angeordnet und angetrieben ist zu einer Bewegung durch die Mündungsöffnung (6) in das Vorformlingsinnere hinein in Richtung auf den Boden (5) des Vorformlings (1) entlang einer Einführstrecke (12) und nach Erreichen eines Umkehrpunktes (10) wieder aus dem Vorformling (1) heraus entlang einer Rückführstrecke (14), zusammen als Spülstrecke bezeichnet, wobei die Verschlusseinrichtung (300) ausgeführt ist, wenigstens auf einer Teilstrecke dieser Spülstrecke diese Fluidverbindung zu öffnen, um Spülgas als Spülgasstrom (220) aus der Spüllanze (250) heraus in Richtung auf den Boden (5) abzublasen, **dadurch gekennzeichnet, dass** die Verschlusseinrichtung (300) weiter ausgeführt ist, wenigstens einmal nach dem Beginn des Abblasens den Spülgasstrom (220) intensitätsverändert abzugeben, insbesondere abgeschwächt abzugeben, insbesondere den Spülgasstrom (220) zu unterbrechen, und nach der Intensitätsveränderung, insbesondere nach der Abschwächung, insbesondere nach der Unterbrechung, den Spülgasstrom (220) wieder zurückverändert, insbesondere wieder anschwellen lässt, insbesondere wieder neu einsetzen lässt, wobei die Vorrichtung insbesondere ausgebildet ist, ein Verfahren nach einem der vorhergehenden Ansprüche 2 bis 6 auszuführen.

8. Vorrichtung (200) nach Anspruch 7, **dadurch gekennzeichnet, dass** die Vorrichtung ein drehbar gelagertes und drehangetrieben ausgeführtes Transportrad (202) aufweist, wobei die Vorformlinge (1) während des Beseitigens von Verunreinigungen auf dem drehenden Transportrad (202) geführt sind, welches in Förderrichtung der Vorformlinge (1) vor einer Umformungseinrichtung (25) angeordnet ist, in der die Vorformlinge (1) zu Behältern umgeformt werden, wobei die Vorrichtung (200) eine Absaugeinrichtung (260) mit einer Ansaugöffnung (262) aufweist, die angeordnet und ausgebildet ist, Spülgas, das den geführten Vorformling (1) mündungsseitig verlässt, quer zur Längsachse (X) des Vorformlings (1) abzusaugen, wobei die Ansaugöffnung (262) bevorzugt so angeordnet und dimensioniert ist, dass nur ein Teilumlaufbereich absaugbeaufschlagt ist, insbesondere derart, dass das Absaugen gleichzeitig mit dem Einblasen des Spülgases oder zeitlich früher als das Einblasen des Spülgases in den Vorformling einsetzt und bevorzugt mit dem Beenden des Einblasens oder kurz danach endet.

9. Vorrichtung nach Anspruch 7 oder 8, **dadurch gekennzeichnet, dass** die Verschlusseinrichtung (300) mehrere Steuerscheiben (302, 320, 330) aufweist, von denen wenigstens zwei relativ zueinander drehend ausgeführt sind, wobei eine der Steuerscheiben (302) über eine Fluidleitung (222) mit der Spüllanze (250) verbunden ist und wobei die andere Steuerscheibe (320) fluidverbunden oder fluidverbindbar mit der Spülgasquelle ist, wobei die Steuerscheiben (302, 320) jeweils Durchgangsöffnungen (326) aufweisen, die so angeordnet und ausgebildet sind, dass bei bestimmten Relativdrehstellungen durch die Steuerscheiben (302, 320, 330) hindurch durch Überlappen der Durchgangsöffnungen eine Fluidverbindung zwischen der Spülgasquelle und der Fluidleitung (222) hergestellt ist, während bei anderen Relativdrehstellungen die Fluidverbindung mangels Überlappung der Durchgangsöffnungen unterbrochen ist.

10. Vorrichtung nach Anspruch 9, **dadurch gekennzeichnet, dass** wenigstens eine der drehenden Steuerscheiben in Umfangsrichtung der Scheibe ein nierenförmiges Langloch (332) aufweist, welches durch Stegbereiche (338, 338a, 338b) in Teillanglöcher unterteilt ist, wobei diese Stegbereiche (338, 338a, 338b) eine Breite aufweisen, um die Durchgangsöffnungen der anderen Steuerscheibe mindestens teilweise, bevorzugt vollständig abzudecken, um dadurch die Fluidverbindung mindestens teilweise, bevorzugt vollständig zu unterbrechen.

11. Vorrichtung nach einem der Ansprüche 7-10, **dadurch gekennzeichnet, dass** die Bewegung der Spüllanze (250) kurvengesteuert ausgeführt ist, wobei bevorzugt und nach den Ansprüchen 9 und 10 die Durchgangsöffnungen in den Steuerscheiben (302, 320) und die Führungskurve (208) so zueinander ausgerichtet sind, dass zeitlich koordiniert ein Spülgasstrom (220) aus der Spüllanze (250) austritt, wenn eine gewünschte Spüllanzenposition erreicht wird, wobei die Spüllanze (250) hierzu bevorzugt mechanisch mit einer Führungsrolle (214) verbunden ist, welche an einer stationär angeordneten Hubeinheit (206) mit Führungskurve (208) entlanglaufend ausgeführt und angeordnet ist.
